# EUROPEAN PATENT APPLICATION

(11) **EP 4 465 168 A1**
(43) Date of publication of application: **20.11.2024**
(21) Application number: 22925598.9
(22) Date of filing: 26.07.2022
(51) Int. Cl.: G06F 8/65

(54) **MICRO-SERVICE CREATION METHOD AND RELATED DEVICE**

(30) Priority: 14.02.2022 CN 202210134482; 24.06.2022 CN 202210726345
(71) Applicant: Huawei Cloud Computing Technologies Co., Ltd., Gui'an New District, Guizhou 550025 (CN)
(72) Inventor: XIAO, Weimin, Guizhou 550025 (CN); WANG, Yu, Guizhou 550025 (CN); ZHU, Jun, Guizhou 550025 (CN); ZHANG, Chunhe, Guizhou 550025 (CN)
(74) Representative: Gill Jennings & Every LLP
(86) International application number: PCT/CN2022/107896
(87) International publication number: WO 2023/151239

(57) **Abstract**

This application provides a microservice creation method, including: presenting a configuration interface to a user; receiving a business model that is of a microservice and that is configured by the user via the configuration interface, where the business model includes metadata of a plurality of business objects and metadata of a relation object that identifies a relation between the plurality of business objects; and generating code of the microservice based on the business model of the microservice. In the method, according to a domain-driven design concept, the code of the microservice is generated based on the user-defined business model, and specifically, based on the metadata of the business objects and the metadata of the relation object that identifies the business objects in the business model, to resolve a problem that simple code at a specific layer is generated through a code generation tool or a functional module built in a development platform. This improves development efficiency. The method allows the user to flexibly define the business model, has good extensibility, and can complete full-link connection for microservice development.

## Description

This application claims priorities to Chinese Patent Application No. 202210134482.4, filed with the China National Intellectual Property Administration on February 14, 2022 and entitled "MICROSERVICE CREATION METHOD, APPARATUS, SERVER, AND STORAGE MEDIUM", and to Chinese Patent Application No. 202210726345.X, filed with the China National Intellectual Property Administration on June 24, 2022 and entitled "MICROSERVICE CREATION METHOD AND RELATED DEVICE", both of which are incorporated herein by reference in their entireties.

### TECHNICAL FIELD

This application relates to the field of software development technologies, and in particular, to a microservice creation method, a system, a computing device cluster, a computer-readable storage medium, and a computer program product.

### BACKGROUND

As requirements of users for software systems are increasing, a microservice design concept is proposed in the industry for developing software systems, to meet increasing demand of the users. Microservice design is to vertically split a single application (for example, a medium-scale or large-scale software system) into a plurality of independent microservices based on functions or business requirements. The microservices are also referred to as subsystems. These subsystems exist as independently deployed processes. The processes communicate with each other through lightweight and cross-language call of a synchronous network or an asynchronous network. When a user raises a new requirement, a new subsystem may be added or a subsystem may be modified, to meet the new requirement. This reduces difficulty in version iteration of a large-scale and complex software system, and facilitates maintenance.

Microservice development involves a large quantity of systematic and repeated code development tasks. To reduce microservice development tasks and improve code standardization, a developer may usually generate a part of code of a microservice through a code generation tool or a functional module built in a development platform. For example, the developer may generate code at a data operation layer through a Mybatis generator (Mybatis Generator, MBG). For another example, the developer may generate framework code through a functional module built in a JHipster development platform.

However, the code generated through the existing code generation tool or the functional module built in the development platform is usually simple code at a specific layer of the microservice, and microservice development flexibility is low. In addition, the developer still needs to spend a large amount of time and effort to develop code at another layer. This affects microservice development efficiency.

### SUMMARY

This application provides a microservice creation method. In the method, according to a domain-driven design concept, code of a microservice is generated based on a user-defined business model, and specifically, based on metadata of business objects and metadata of a relation object that identifies the business objects in the business model, to resolve a problem that simple code at a specific layer is generated through a code generation tool or a functional module built in a development platform. This improves development efficiency. This application further provides a code management system corresponding to the foregoing method, a computing device cluster, a computer-readable storage medium, and a computer program product.

According to a first aspect, this application provides a microservice creation method. The method may be performed by a code management system. The code management system may be a software system. The software system may be deployed in a computing device cluster. The computing device cluster executes program code corresponding to the software system, to perform the microservice creation method in this embodiment of this application. In some embodiments, the code management system may alternatively be a hardware system having a microservice creation function. For example, the code management system may be a computing device cluster having the microservice creation function.

Specifically, the code management system may present a configuration interface to a user, and receive a business model that is of a microservice and that is configured by the user via the configuration interface. The business model includes metadata of a plurality of business objects and metadata of a relation object that identifies a relation between the plurality of business objects. Then, the code management system generates code of the microservice based on the business model of the microservice.

In the method, the code management system generates, according to a domain-driven design concept, the code of the microservice based on the user-defined business model, and specifically, based on the metadata of the business objects and the metadata of the relation object that identifies the business objects in the business model, to resolve a problem that simple code at a specific layer is generated through a code generation tool or a functional module built in a development platform. This improves development efficiency.

In addition, the method allows the user to flexibly define the business model, has good extensibility, and can complete full-link connection of microservice development, resolve a large amount of framework development work at an early stage of the microservice development, and resolve cloud service interconnection, deployment system interconnection, middleware support, architecture design in a high-performance and high-reliability scenario, and the like, to provide a mature product-level solution to a developer.

In some possible implementations, the code management system may generate base module code and extension module code based on the business model of the microservice. The base module code is incapable of being modified by the user, the extension module code is capable of being modified by the user, and the base module code is separated from the extension module code.

In the method, the code of the microservice is divided into the base module code that is incapable of being modified by the user and the extension module code that is capable of being modified by the user. In this way, the base module code can be repeatedly generated, to reduce repeated development and improve the development efficiency. In addition, customized development can be implemented based on the extension module code, to meet a personalized requirement.

In some possible implementations, the code of the microservice includes at least one of code at a controller layer, code at a business logic layer, code at a data aggregation layer, code at a data persistence operation layer, and code at a database entity layer. In this way, the problem that the simple code at the specific layer is generated through the code generation tool or the functional module built in the development platform is resolved, to improve the development efficiency.

In some possible implementations, the code management system may generate the code at the data persistence operation layer of the microservice based on the metadata of the business object or the metadata of the relation object, where the code at the data persistence operation layer of the microservice includes interface code and query resource code.

The interface code may be code of an application programming interface API, and the query resource code may be code of a mapper resource. The code management system can implement data persistence through the API by automatically generating the foregoing code.

In some possible implementations, the relation between the plurality of business objects includes one or more of a one-to-many relation, a many-to-many relation, a recursion relation, or an aggregation relation. In the method, the code management system provides a plurality of relations, so that the user defines the relation between the plurality of business objects, to meet a requirement for generating code of a corresponding microservice in different business scenarios.

In some possible implementations, the plurality of business objects include a first business object and a second business object, and a relation between the first business object and the second business object is the aggregation relation. Further, the code management system may aggregate the first business object and the second business object to obtain a data transfer object, and then generate the query resource code for the data transfer object.

In this way, a code generation requirement of the microservice of the business objects in a complex relation can be met, and the microservice can be automatically created, thereby improving the microservice development efficiency.

In some possible implementations, the code management system may aggregate the business objects in a plurality of manners. Specifically, the code management system may aggregate the first business object and the second business object in a nested mode or a Cartesian mode to obtain the data transfer object.

The nested mode is to organize, by using a business object as a reference, another business object list related to the business object, to form an aggregate object. The Cartesian mode is to aggregate attributes of business objects to be aggregated, to form an aggregate object. The aggregate object includes all attributes of the business objects in the aggregation relation, and names of the business objects are used as attribute prefixes for these attributes.

In the method, the business objects are aggregated into the data transfer object, and the query resource code is generated based on the data transfer object, to provide a query service subsequently. It should be noted that the code management system may generate different query methods based on different aggregation modes. The different query methods may be persistently stored by using corresponding data transfer object mapper files.

In some possible implementations, the business model further includes metadata of an extended application programming interface API. The code management system may further generate code of the extended API based on the metadata of the extended API. In this way, the microservice or some functions of the microservice may be provided through the API to another service for use, so that availability is high.

In some possible implementations, the code management system may receive a code generation policy configured by the user via the configuration interface. Correspondingly, the code management system may generate the code of the microservice based on the business model of the microservice and according to the code generation policy.

In the method, the code management system supports a plurality of code generation policies, and may generate the code of the microservice according to the code generation policy configured by the user, to improve microservice development flexibility and the microservice development efficiency.

In some possible implementations, the code generation policy includes creation or inheritance. The creation may be creating the microservice from scratch, for example, creating a new microservice, including a microservice of a new application or a microservice corresponding to a new function of an application. The inheritance may be creating the microservice based on an existing microservice, for example, upgrading a version of a specific microservice.

In some possible implementations, the code management system may receive a component extension policy configured by the user via the configuration interface. Correspondingly, when generating the code of the microservice, the code management system may generate code of an extended component of the microservice based on the business model of the microservice and according to the component extension policy.

The code management system generates the code of the extended component according to the component extension policy configured by the user. In this way, a microservice with richer and more powerful functions can be developed, and high availability is achieved.

In some possible implementations, the extended component includes one or more of an authentication component, a validation component, a probe component (which may also be referred to as a monitoring component), and an annotation configuration component.

The authentication component can provide SpringSecurity-based authentication and authorization capabilities or a role-based access control RBAC permission model-based authentication capability, to ensure data security. The validation component can provide SpringSecurity-based parameter validation or Jasypt-based secure cryptography enhancement features. This is more convenient for the user to use. The probe component can provide a probe feature. Automatic interconnection between a log system, a monitoring system, and a link call system can be implemented only through simple configuration performed by the user. The probe component can also provide standard log, monitoring, and link call configurations. Automatic analysis and presentation in one-click mode can be implemented by selecting a standard template in the system. The annotation configuration component can provide a simple and easy-to-use annotation configuration mode, to automatically generate rate limiting, circuit breaker, and fallback configurations for the user.

Further, the extended component may include a multi-data-source management component, a sharding component, a distributed cache service DCS component, a distributed message service DMS component, upload and download, import and export, a scheduled task component, and a metadata component.

The multi-data-source management component supports configuration and dynamic switching of a plurality of types of data sources, and supports a plurality of easy-to-use usage modes. This achieves good user experience. In addition, the multi-data-source management component can provide a remote disaster recovery capability. The multi-data-source component may further support dynamic management and switching of the data sources through a distributed configuration center. In addition, the multi-data-source component can support a random and round-robin load balancing algorithm to implement read-write splitting.

The sharding component may perform secondary development based on an open-source component. This resolves performance difficulty in startup loading, greatly shortens startup time, and optimizes startup performance. In addition, the sharding component enhances support for structured query language SQL and has good compatibility with SQL query.

Specifically, the sharding component in embodiments of this application is positioned as a lightweight Java framework, and is an additional service provided at a JDBC layer of Java. With a client connecting directly to a database, the sharding component provides a service in a form of jar and requires no extra deployment and dependence. The sharding component may be understood as an enhanced JDBC driver, and is fully compatible with JDBC and various ORM frameworks.

Sharding may be implemented through data sharding. The data sharding means dispersedly storing data that is in a single database to a plurality of databases or tables at a specific dimension, to improve a performance bottleneck and availability. Splitting manners of the data sharding are classified into vertical sharding and horizontal sharding.

The vertical sharding is also referred to as vertical splitting, and is specifically splitting by business. A core concept of the vertical sharding is a dedicated database. For example, a user table and an order table are vertically sharded to different databases based on a business requirement. The horizontal sharding is also referred to as horizontal splitting. Compared with the vertical sharding, the horizontal sharding does not classify data based on business logic. Instead, the data is distributed to multiple databases or tables by using a specific field (or several specific fields) according to a specific rule. Each shard includes only a part of the data. For example, primary keys are used for sharding, where a record of an even-numbered primary key is stored in a database (or table) 0, and a record of an odd-numbered primary key is stored in a database (or table) 1. The horizontal sharding theoretically breaks through a bottleneck of a data amount processed by a single database instance, is free in extensibility, and is a standard solution for sharding.

Further, for an application system that simultaneously has a large quantity of concurrent read operations and a small quantity of write operations, a database is split into a master database and a slave database. The master database is responsible for processing transactional addition, deletion, and modification operations, and the slave database is responsible for processing a query operation. This can effectively avoid a row lock caused by data update, to greatly improve query performance of the entire system.

Different from the horizontal sharding in which data is distributed to each data node based on sharding keys, the read-write splitting respectively routes the read and write operations to the master and slave databases based on SQL semantic analysis. Data content in data nodes in the read-write splitting is consistent, but data content in the data nodes in the horizontal sharding is different. System performance can be more effectively improved by jointly applying the horizontal sharding and the read-write splitting.

The distributed cache service component can provide compatibility of a plurality of cache drivers. For example, the distributed cache service component can support compatibility of a plurality of drivers of Redis. In addition, the distributed cache service component supports remote disaster recovery and has abundant application scenarios such as single-read-write, write on one side, and read on a local side.

The distributed message service component can provide message rate limiting, asynchronous thread pool processing and synchronization processing for a message, message offset management, and an asynchronized message high-reliability mechanism, to ensure capabilities such as that a message is not lost. The message rate limiting can be implemented by adding a rate limiting component between an internal consumer pull message and business processing. The message offset is persisted to avoid the loss of the message. First, after the business processing, offsets are directly persisted in batches. Because of synchronization, the offsets are in ascending order. Then, an ordered structure is maintained in a main memory asynchronously. After the business processing, the offsets are added to the main memory, a persistence process is triggered by using a specific mechanism, and the offsets are persisted in batches according to an offset-ascending-order rule. In consumer rebalance, an offset is pulled from a database for consumption at a specified location, to ensure that a message is not lost in an asynchronous processing scenario. In addition, an offset at a server is not used during the rebalance. However, to ensure consistency between the server and the database as much as possible, the consumer may manually push a persistent offset in a main memory each time the consumer pulls a message.

In some possible implementations, the code management system may further create a database model. The database model includes a root table object and a sharding object. Configuration of an open-source component usually needs to be implemented by the user through complex configuration, and automatic configuration of the sharding and the read-write splitting can simplify the complex configuration.

In some possible implementations, the code management system may further generate a code directory of the microservice, where the code directory includes a plurality of subdirectories, and the plurality of subdirectories are in one-to-one correspondence with the plurality of layers of code.

In the method, a code layering specification and a directory structure layering specification are defined. The code layering specification is in one-to-one correspondence with the directory structure layering specification, and code at different layers is placed in different directories, to form code layers, for example, a controller layer, a service layer, a data aggregation layer, and a data operation layer. In this way, it is convenient for the user to view or modify code by using a directory structure, to improve user friendliness.

According to a second aspect, this application provides a code management system. The system includes:
an interaction module, configured to present a configuration interface to a user;
a communication module, configured to receive a business model that is of a microservice and that is configured by the user via the configuration interface, where the business model includes metadata of a plurality of business objects and metadata of a relation object that identifies a relation between the plurality of business objects; and
a generation module, configured to generate code of the microservice based on the business model of the microservice.

In some possible implementations, the generation module is specifically configured to:
generate base module code and extension module code based on the business model of the microservice, where the base module code is incapable of being modified by the user, the extension module code is capable of being modified by the user, and the base module code is separated from the extension module code.

In some possible implementations, the code of the microservice includes at least one of code at a controller layer, code at a business logic layer, code at a data aggregation layer, code at a data persistence operation layer, and code at a database entity layer.

In some possible implementations, the generation module is specifically configured to:
generate the code at the data persistence operation layer of the microservice based on the metadata of the business object or the metadata of the relation object, where the code at the data persistence operation layer of the microservice includes interface code and query resource code.

In some possible implementations, the relation between the plurality of business objects includes one or more of a one-to-many relation, a many-to-many relation, a recursion relation, or an aggregation relation.

In some possible implementations, the plurality of business objects include a first business object and a second business object, a relation between the first business object and the second business object is the aggregation relation, and the system further includes:
an aggregation module, configured to aggregate the first business object and the second business object to obtain a data transfer object.

The generation module is specifically configured to:
generate the query resource code for the data transfer object.

In some possible implementations, the aggregation module is specifically configured to:
aggregate the first business object and the second business object in a nested mode or a Cartesian mode to obtain the data transfer object.

In some possible implementations, the business model further includes metadata of an extended application programming interface API, and the generation module is further configured to:
generate code of the extended API based on the metadata of the extended API.

In some possible implementations, the communication module is further configured to:
receive a code generation policy configured by the user via the configuration interface.

The generation module is specifically configured to:
generate the code of the microservice based on the business model of the microservice and according to the code generation policy.

In some possible implementations, the code generation policy includes creation or inheritance.

In some possible implementations, the communication module is further configured to:
receive a component extension policy configured by the user via the configuration interface.

The generation module is specifically configured to:
generate code of an extended component of the microservice based on the business model of the microservice and according to the component extension policy.

In some possible implementations, the extended component includes one or more of an authentication component, a validation component, a probe component, and an annotation configuration component.

In some possible implementations, the system further includes:
a creation module, configured to create a database model, where the database model includes a root table object and a sharding object.

In some possible implementations, the code of the microservice includes a plurality of layers of code, and the generation module is further configured to:
generate a code directory of the microservice, where the code directory includes a plurality of subdirectories, and the plurality of subdirectories are in one-to-one correspondence with the plurality of layers of code.

According to a third aspect, this application provides a computing device cluster. The computing device cluster includes at least one computing device, and the at least one computing device includes at least one processor and at least one memory. The at least one processor and the at least one memory communicate with each other. The at least one processor is configured to execute instructions stored in the at least one memory, to enable the computing device or the computing device cluster to perform the code generation method according to any one of the first aspect or the implementations of the first aspect.

According to a fourth aspect, this application provides a computer-readable storage medium, where the computer-readable storage medium stores instructions, and the instructions instruct a computing device or a computing device cluster to perform the code generation method according to any one of the first aspect or the implementations of the first aspect.

According to a fifth aspect, this application provides a computer program product including instructions. When the computer program product runs on a computing device or a computing device cluster, the computing device or the computing device cluster is enabled to perform the code generation method according to any one of the first aspect or the implementations of the first aspect.

In this application, based on the implementations provided in the foregoing aspects, the implementations may be further combined to provide more implementations.

### BRIEF DESCRIPTION OF DRAWINGS

To describe technical methods in embodiments of this application more clearly, the following briefly describes the accompanying drawings needed in embodiments.
FIG. 1 is a diagram of a microservice creation scenario according to an embodiment of this application;
FIG. 2 is a diagram of an architecture of a code management system according to an embodiment of this application;
FIG. 3 is a flowchart of a microservice creation method according to an embodiment of this application;
FIG. 4 is a diagram of a data document of metadata according to an embodiment of this application;
FIG. 5 is a diagram of a structure of code of a microservice according to an embodiment of this application;
FIG. 6 is a diagram of a structure of code of a microservice according to an embodiment of this application;
FIG. 7 is a diagram of a structure of a database model according to an embodiment of this application;
FIG. 8 is a flowchart of a microservice creation method according to an embodiment of this application;
FIG. 9A to FIG. 9H are diagrams of interfaces of steps in a microservice creation method according to an embodiment of this application;
FIG. 9I and FIG. 9J are diagrams of a code generation procedure and a code generation result according to an embodiment of this application;
FIG. 10 is a flowchart of a microservice creation method according to an embodiment of this application;
FIG. 11A to FIG. 11D are diagrams of interfaces of steps in microservice creation according to an embodiment of this application;
FIG. 12 is a flowchart of a microservice creation method according to an embodiment of this application;
FIG. 13A to FIG. 11D are diagrams of interfaces of steps in microservice creation according to an embodiment of this application;
FIG. 14 is a diagram of a structure of a code management system according to an embodiment of this application; and
FIG. 15 is a diagram of a structure of a computing device cluster according to an embodiment of this application.

### DESCRIPTION OF EMBODIMENTS

Terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

Microservice design is a software development technology that divides a single application (for example, a medium-scaled or large-scaled software system) into a group of small services (also referred to as microservices) for separate development. An architecture of the application developed by using the software development technology is referred to as a microservice architecture. In the microservice architecture, the microservices coordinate and cooperate with each other to implement functions of the application. Each microservice runs in an independent process, and the microservices may coordinate or cooperate with each other by using a lightweight communication mechanism. The lightweight communication mechanism may be, for example, a hypertext transfer protocol (HyperText Transfer Protocol, HTTP)-based representational state transfer application programming interface (RESTful application programming interface, API).

Microservice development involves a large quantity of systematic and repeated code development tasks. To reduce microservice development tasks and improve code standardization, during the microservice development, a developer may automatically generate a part of code of a microservice through a code generation tool or a functional module built in a development platform.

For example, the developer may generate code at a data operation layer through a MyBatis generator (MyBatis Generator, MBG). Specifically, the MBG is connected to one or more database tables, and generates the code that is at the data operation layer and that is for accessing the database table. The code includes a persistent object (PO) corresponding to the database table, a data access object (Data Access Object, DAO), or a structured query language (Structured Query Language, SQL) statement for implementing create, retrieve, update, delete (create, retrieve, update, delete, CRUD) operations. For another example, the developer may generate front-end and backend framework code through a functional module built in a JHipster development platform.

However, the code generated through the code generation tool or the functional module built in the development platform is usually simple code at a specific layer of the microservice, and the developer still needs to spend a large amount of time and effort to develop code at another layer. In addition, microservice development flexibility is low, and extendibility is limited. This affects microservice development efficiency.

In view of this, embodiments of this application provide a microservice creation method. The method may be performed by a code management system. The code management system may be a software system. The software system may be deployed in a computing device cluster. The computing device cluster executes program code corresponding to the software system, to perform the microservice creation method in embodiments of this application. In some embodiments, the code management system may alternatively be a hardware system having a microservice creation function. For example, the code management system may be a computing device cluster having the microservice creation function. For ease of understanding, the following provides descriptions by using an example in which the code management system is the software system.

Specifically, the code management system may present a configuration interface to a user, and receive a business model that is of a microservice and that is configured by the user via the configuration interface. The business model includes metadata of a plurality of business objects and metadata of a relation object that identifies a relation between the plurality of business objects. Then, the code management system generates code of the microservice based on the business model of the microservice.

In the method, the code management system generates, according to a domain-driven design (Domain Driven Design, DDD) concept, the code of the microservice based on the user-defined business model, and specifically, based on the metadata of the business objects and the metadata of the relation object that identifies the business objects in the business model, to resolve a problem that simple code at a specific layer is generated through a code generation tool or a functional module built in a development platform. This improves development efficiency.

In addition, the method allows the user to flexibly define the business model, has good extensibility, and can complete full-link connection of microservice development, resolve a large amount of framework development work at an early stage of the microservice development, and resolve cloud service interconnection, deployment system interconnection, middleware support, architecture design in a high-performance and high-reliability scenario, and the like, to provide a mature product-level solution to a developer.

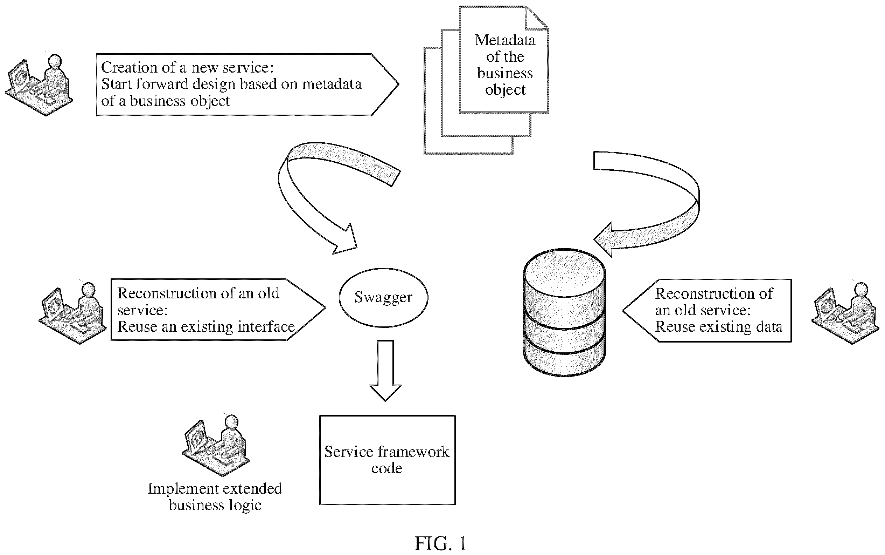

The microservice creation method in embodiments of this application may be applied to a scenario in which an existing microservice is reconfigured, or may be applied to a scenario in which a new microservice is created. Refer to FIG. 1, namely, a diagram of a microservice creation scenario. When creating the new microservice, the code management system may start forward design based on metadata that is of a business object and that is configured by a user. When reconfiguring the existing microservice, for example, migrating or restructuring the existing microservice, the code management system may reuse an existing interface and existing data for the reconfiguration. The existing data may be a data definition language (Data Definition Language, DDL) statement, and the DDL statement describes an entity to be stored in a database.

The following describes a system architecture of the code management system in embodiments of this application with reference to the accompanying drawings.

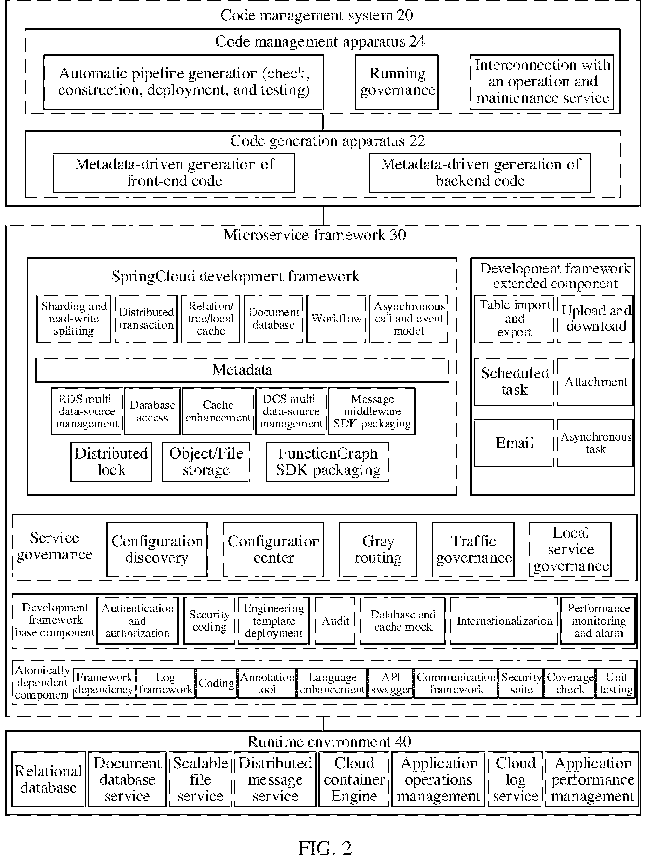

Refer to FIG. 2, namely, a diagram of an architecture of the code management system. The code management system 20 is located at an upper layer of an entire application development framework, the code management system 20 may be interconnected with a microservice framework 30 in the application development framework, and the microservice framework 30 is interconnected with a runtime environment 40 at a bottom layer.

The code management system 20 includes a code generation apparatus 22. The code generation apparatus 22 is configured to generate front-end code and backend code of a microservice based on metadata, for example, metadata of business objects and metadata of a relation object in a business model. Further, the code management system 20 may include a code management apparatus 24. The code management apparatus 24 is configured to perform continuous integration continuous delivery (Continuous Integration Continuous Delivery, CICD) on code. Specifically, the code management apparatus 24 is configured to generate a pipeline for checking, constructing, deploying, and testing the code, to implement construction, deployment, and testing of a microservice. The code management apparatus 24 is further configured to perform governance, operation, and maintenance on the microservice.

The microservice framework 30 is configured to provide different components, features, or capabilities to assist microservice exposure. As shown in FIG. 2, the microservice framework 30 includes a development framework and a development framework extended component. The development framework may be a Spring Cloud development framework, denoted as Spring Cloud DevSpore. The development framework extended component may be a Spring Cloud development framework extended component, denoted as DevSpore Component. In this example, Spring Cloud DevSpore relies on a cloud service, and DevSpore Component may not rely on the cloud service.

Spring Cloud DevSpore can provide a series of high-performance, high-reliability, and high-availability features, including but not limited to sharding, read-write splitting, a distributed transaction, relation/tree/local cache, a document database, a workflow, asynchronous call, an event model, multi-data-source management, cache enhancement, database access, message middleware software development kit (software development kit, SDK) packaging, a distributed lock, and object/file storage. The multi-data-source management may be further classified into relational database service (relational database service, RDS) multi-data-source management and distributed cache service (Distributed Cache Service, DCS) multi-data-source management. Some features are implemented based on metadata (metadata). DevSpore Component can provide a series of simple and easy-to-use functions or features, including but not limited to table import and export, upload and download, a scheduled task, an attachment, an email, and an asynchronous task.

The microservice framework 30 may further include a service governance layer, a development framework base component layer, and an atomically dependent component layer. The service governance layer may also be referred to as a SpringCloud layer, and provides a basic feature, for example, one or more of configuration discovery, a configuration center, gray routing, traffic governance, and local service governance, needed for service governance. The development framework base component layer is also referred to as a SpringBoot DevSpore layer, and provides a series of basic functions, including but not limited to authentication and authorization, security coding, deployment, audit, database/cache simulation, internationalization, and performance monitoring/alarming. The atomically dependent component layer is also referred to as a SpringBoot layer. The layer may include one or more of Spring framework dependency, a log framework, coding, an annotation tool, language enhancement, API Swagger, a communication framework, a security suite, coverage check, and unit testing (such as JUnit).

The runtime environment 40 includes an infrastructure, and the infrastructure may be basic middleware for implementing computing and storage. In some embodiments, the infrastructure includes one or more of an RDS, a document database service (document database service, DDS), a scalable file service (scalable file service, SFS), a distributed message service (distributed message service, DMS), DCS, a cloud container engine (cloud container engine, CCE), application operations management (application operations management, AOM), a log tank service (log tank service, LTS), and application performance management (application performance management, APM).

The following describes the microservice creation method in embodiments of this application from a perspective of the code management system 20.

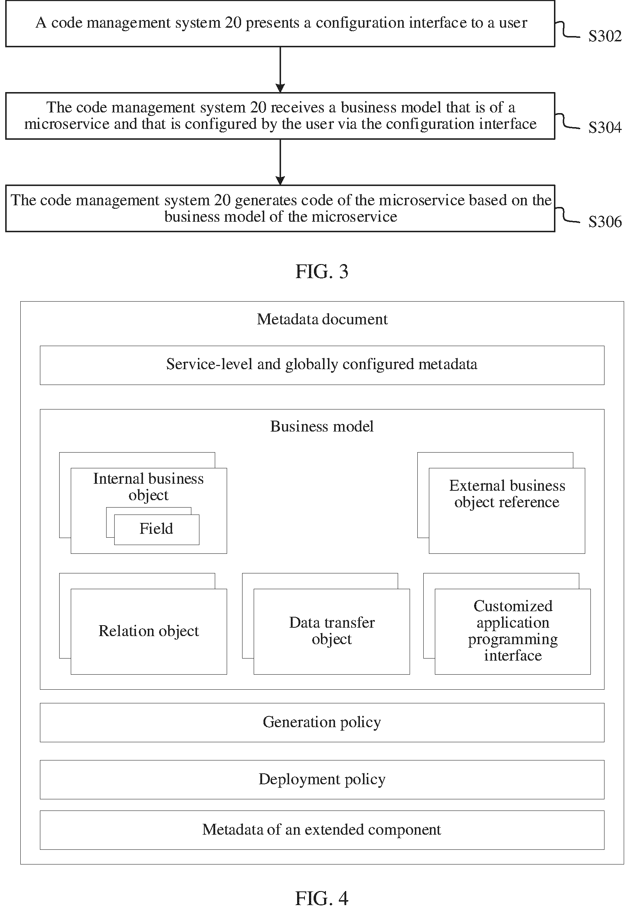

Refer to FIG. 3, namely, a flowchart of a microservice creation method. The method includes the following steps.

S302: The code management system 20 presents a configuration interface to a user.

The configuration interface is specifically an interface that supports the user in configuring a related attribute of a to-be-created microservice. The configuration interface may be a graphical user interface (graphical user interface, GUI) or a command user interface (command user interface, CUI).

Further, the to-be-created microservice may be a microservice to be created from scratch (a new microservice) or a microservice to be reconfigured based on an existing microservice. A configuration interface presented by the code management system 20 when the new microservice is created may be different from a configuration interface presented by the code management system 20 when the existing microservice is reconfigured. The configuration interface presented by the code management system 20 when the new microservice is created supports the user in configuring an attribute of the new microservice. The configuration interface presented by the code management system 20 when the existing microservice is reconfigured supports the user in configuring a reusable attribute of the existing microservice.

S304: The code management system 20 receives a business model that is of the microservice and that is configured by the user via the configuration interface.

One microservice may include massive business logic. Based on a domain-driven design DDD concept, the business logic may be abstracted into a series of business objects and combined operations. The business logic may be classified into domain logic and non-domain logic. The domain logic may include addition and modification of a business object, and is domain-driven and not easy to change. The non-domain logic includes query and deletion of a business object, and is data-driven and easy to change. The DDD is a software development method that meets a complex requirement by connecting an implementation to a continuously evolving domain model. A prerequisite for the DDD is as follows: A primary focus of a project is placed in a core domain (core domain) and the domain logic; complex design is placed on a domain model with a bounded context (bounded context); and collaboration between a technician and a domain expert is initiated to iteratively refine a domain model that addresses a particular domain problem. The domain model is an abstraction of the business model, and the DDD is a mode of translating the business model into system architecture design.

The user may configure the business model of the microservice based on the foregoing business logic. The business model includes metadata of a plurality of business objects (business objects, BOs) and metadata of a relation object that identifies a relation between the plurality of business objects. The business object is an object corresponding to a business-related entity. The business-related entity may include a person, a thing, or an event. For example, an e-commerce business-related entity may include an order, a shopping cart, a person, or a commodity. The metadata of the business object includes an attribute of the business object, for example, an identifier of the business object, a type of the business object, and a primary key type (primaryKeyType). The identifier of the business object is unique, and for example, may be a number of the business object or a name of the business object.

There is an association relation between the plurality of business objects, and an object that identifies the relation between the plurality of business objects is the relation object. The metadata of the relation object includes an identifier of the relation object, a type of the relation object, and a name of a business object associated with the relation object. The identifier of the relation object is unique, and for example, may be a number of the relation object or a name of the relation object. The type of the relation object may include a one-to-many relation, a many-to-many relation, a parent-child relation (also referred to as a recursion relation), or an aggregation relation.

The one-to-many relation is a relation in which one first business object corresponds to a plurality of second business objects. For example, an association relation between a "department" and "employees" is specifically the one-to-many relation. Life cycles of the business objects associated with the one-to-many relation are completely decoupled. A relation object of the one-to-many relation can be created only after the two types of business objects are created. Deletion of a relation object indicates an end of a specific relation between two business objects, and does not affect a life cycle of any business object. Still using the "department" and the "employee" as an example, an employee may be transferred from a "department" to another "department"; or a "department" is canceled, but an employee in the "department" is still in an enterprise. In the foregoing cases, a relation object between the "department" and the "employee" may be deleted.

The many-to-many relation is a relation in which a plurality of first business objects correspond to a plurality of second business objects. For example, an association relation between "teachers" and "students" is specifically the many-to-many relation. Life cycles of the business objects associated with the many-to-many relation are also completely decoupled. This is similar to a case of the one-to-many relation. Usually, a relation object of the many-to-many relation can be created only after the two types of business objects are created. Deletion of the relation object does not affect a life cycle of any business object. The relation object may be stored in an opposite relation table. The relation table may further include another extended field in addition to foreign keys that respectively point to the two business objects. The extended field includes but is not limited to expiration time of the relation, a weight of the relation, and the like.

The parent-child relation is a relation between a business object that functions as a parent object and a business object that functions as a child object. The parent object and the child object are objects of a same type. The parent object and the child object may be stored in a same database table, and one field of the child object points to an identifier (identifier, ID) of the parent object. A business object has no parent object is a root object. The root object and a descendant object of the root object form a tree relation. In some scenarios, the parent-child relation may need to be represented by an independent relation object. For example, when creation time and expiration time of the relation need to be annotated, the relation object may be created. The relation object corresponds to one database table in a database, and a parent field and a child field in the database table respectively point to records in the business objects.

The aggregation relation is a relation between a business object that functions as a root object and a business object that functions as an internal object (namely, an internal business object). The root object may be usually an entity, and the internal object may be a value object. The root object and the internal object may be usually stored in independent database tables. One root object may alternatively correspond to a plurality of internal objects, but an ID of the internal object is meaningful within a range of the root object. To be specific, an ID of the root object usually needs to be first obtained to operate the internal object, and the internal object can be created only after the root object is created. If the root object is deleted or released, a life cycle of the internal object also ends accordingly. For ease of understanding, this embodiment of this application provides an example. In this example, the root object may be an "apartment", and the internal object may be a "window". The "apartment" has a globally unique ID, and the ID of the "apartment" may be generated based on an address and a room number. In view of this, a specific "apartment" may be searched for based on the foregoing ID. Usually, the "window" can be referenced only after a room is found. In this case, the "apartment" and the "window" are in the aggregation relation.

In a scenario in which the existing microservice is reconfigured, the user may further reuse a business model of the existing microservice. For example, an annotation of the business model may be configured and applied to code. In this way, the code management system 20 may reversely generate the metadata of the business object or the metadata of the relation object based on the annotation configured by the user.

FIG. 4 is a diagram of a data document of metadata. As shown in FIG. 4, a business model includes metadata of a business object, the metadata of the business object includes a business object definition, the business object definition may include an object field definition (denoted as fields), and the object field definition represents an attribute of the business object, for example, an ID, a name, a type, or a primary key type of the business object. The business object may be an internal object (denoted as Internal BOs). For the internal object, the business model further includes an external object (namely, an external business object) reference (denoted as an External BOs reference) of the internal object. The external object reference may be a business object reference of another microservice.

Further, the business model includes metadata of a relation object (denoted as relation objects, ROs). The metadata of the relation object includes a relation object definition, and the relation object definition includes an attribute of the relation object, for example, an ID of the relation object, a type of the relation object, or an ID of a business object associated with the relation object.

S306: The code management system 20 generates code of the microservice based on the business model of the microservice.

A model-view-controller (Model-View-Controller, MVC) mode is generally applied to conventional application development. The MVC mode is a software architecture mode in software engineering. In this mode, a software system is divided into three basic parts: a model, a view, and a controller. The model may be a function for a technician (for example, a programmer) to write a program and is obtained by a database expert by performing data management and database design. The view may be obtained by an interface designer by performing graphical interface design. The controller is responsible for forwarding and processing a request.

In the DDD concept, the MVC mode is further distinguished. Specifically, the code of the microservice may be divided into the following layers: a controller (denoted as controller) layer, a business logic (denoted as controller) layer, a data aggregation (denoted as repository, also referred to as DAO) layer, a data persistence operation (denoted as mapper) layer, and a database entity (denoted as entity) layer. The entity layer may also be referred to as a model (denoted as model) layer.

The controller layer is for controlling a business procedure. In a specific implementation, the controller layer may invoke an interface provided by the service layer, to control the business procedure. For a specific business procedure, the controller layer may include different controllers. The service layer is for implementing application logic of a service module, and may include an interface for business processing and an implementation class of the interface. An association relation between the interface and the implementation class may be configured in a configuration file, so that the controller can invoke the interface to perform business processing. The repository layer is for performing a data aggregation operation, and is specifically a data aggregation operation that links the service layer and the mapper layer. The mapper layer is for implementing data persistence. Some tasks responsible for communicating with a database may be encapsulated at the mapper layer. The entity layer is also referred to as a model layer or a pojo layer. Generally, one entity class may correspond to one database table, and an attribute of the entity class corresponds one-to-one to a field in the database table.

Based on this, the code management system 20 may generate at least one of code at the controller layer, code at the service layer, code at the repository layer, code at the mapper layer, and code at the entity layer based on the business model of the microservice. The controller layer may provide a plurality of access modes, for example, representational state transfer (Representational State Transfer, REST) or remote procedure call (Remote Procedure Call, RPC), for use.

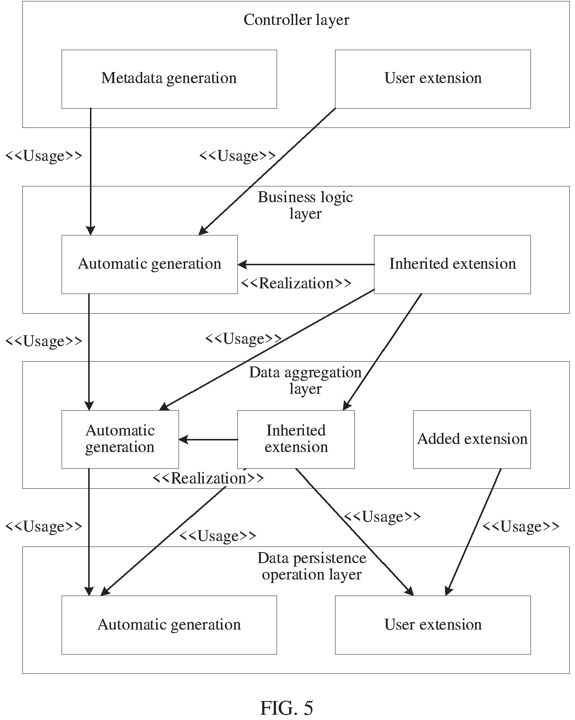

Refer to FIG. 5, namely, a diagram of generation of code of a microservice. The code management system 20 may generate the code at the controller layer, for example, controller, based on the metadata. In addition, the code management system 20 further supports generation of an extension class at the controller layer, to meet a special requirement of the user. The extension class is also referred to as user extension. The controller layer may further provide usage (usage) to the service layer. The code management system 20 may automatically generate the code at the service layer, for example, the interface that is at the service layer and that is for the business processing. In addition, special business logic of the user may be implemented through an extension class (where the extension class may be obtained through inheritance, and is also referred to as inherited extension) at the service layer. The service layer may provide usage to the repository layer. The code management system 20 may automatically generate the code at the repository layer. The repository layer is an abstract data interface layer, and the code management system 20 encapsulates an actual database type and an actual object-relational mapping (Object Relational mapping, O/R mapping) implementation at a bottom layer through a consistent interface. For example, for non-relational SQL (non-relational SQL, NoSQL) such as MongoDB and relational databases such as MySQL and PostgresSQL, the code management system 20 may provide a unified data access interface of a Spring Data style. The interface encapsulates the actual database type and the actual O/R mapping implementation at the bottom layer. Further, for the relational database, the code management system 20 may encapsulate a difference between an O/R mapping interface that complies with a JPA standard and an O/R mapping interface of an iBatis style. In addition, the code management system 20 may generate an extension class, namely, inherited extension, at the repository layer through inheritance, or may generate an extension class, namely, added extension, at the repository layer through addition. The repository layer may further provide usage to the mapper layer. The mapper layer may be an O/R mapping layer, and implements data persistence through mutual conversion between an object-oriented object model (for example, a business model) and a data structure of a database (for example, the relational database). The code management system 20 may automatically generate the code at the mapper layer based on the foregoing O/R mapping. Further, the code management system 20 may generate an extension class at the mapper layer, where the extension class is user extension. Code of the foregoing extension class (for example, an extended API) may be generated based on metadata of the extended API.

Considering that some code may be repeatedly generated, the code management system 20 may generate base (base) module code and extension module code based on the business model of the microservice. The extension module code is also referred to as service module code. The base module code may be automatically generated during each time of compilation, cannot be modified by the user, and is usually code in a fixed mode. The service module code can be modified by the user. For example, business logic can be modified or added by the user. The service module code is generally not generated repeatedly. The code management system 20 separates the base module code (for example, automatically generated code in FIG. 5) from the service module code (for example, inherited extension and user extension in FIG. 5), to repeatedly generate the code and improve code generation efficiency.

In this embodiment, the base module code defines a series of interfaces and corresponding default implementations, and the service module code may be inherited or extended to overwrite or extend a default implementation, to extend the business logic.

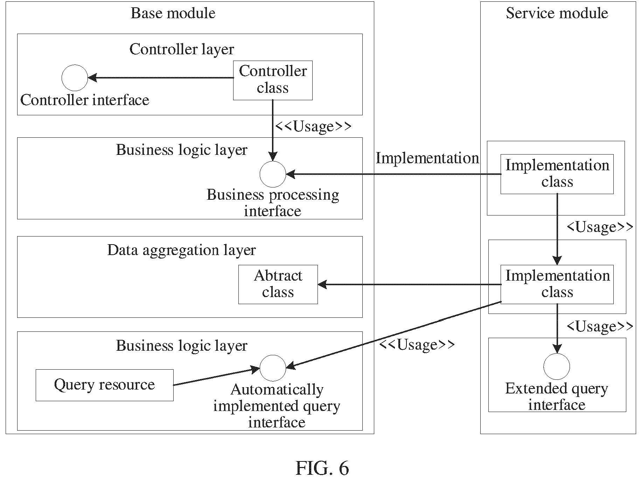

As shown in FIG. 6, a service layer in the base module code defines an interface for business processing, and provides default implementation code; and a service layer in the service module code implements the interface through extension, to implement business logic writing. When the interface is implemented through extension, the user may modify an existing method, for example, a default method, to implement the business logic without adding a new method.

Similarly, a repository layer in the base module code defines a repository abstract class, and a repository layer in the service module code defines a repository implementation class. The user may add a new method or modify an existing method to implement the business logic. A mapper layer in the base module code defines an automatically implemented mapper interface (interface code) and a mapper resource (also referred to as query resource code). A mapper layer in the service module code defines an extended mapper interface. The extended mapper interface is initially an empty interface. The user may add a new method to add a database operation.

The code management system 20 may generate standardized interface code (API) and query resource code (mapper resource) based on the metadata of the business object or the metadata of the relation object. When the API is accessed in REST mode, the API complies with RESTAPI naming and format specifications.

Because the API of the microservice may be for operating the business object, a service path (for example, an API path) of the microservice may be represented by a service version path and a business object path. In some embodiments, the service path may be represented by /{service version path}/{business object path}. The service version path may be /{service name in lowercase}/{service version number}. For example, a service version path of a microservice UCT may be /uct/v1, and a business object path may be /{object type name}s. Code for operating a business object may include an operation keyword and a service path.

The following provides descriptions by using a project object of a UCT service version v1 interface as an example. Specifically, an API of the microservice may be for obtaining an object list, and code for obtaining the object list may be a GET /uct/v1/projects? query condition. Code for adding a business object may be POST /uct/v1/projects, code for deleting a business object may be DELETE /uct/v1/projects/{project_id}, code for modifying a business object may be PUT /uct/v1/projects/{project_id}, and code for obtaining a business object may be GET /uct/v1/projects/{project_id}.

In some possible implementations, the API of the microservice further supports a batch operation on business objects, for example, adding business objects in batches, deleting business objects in batches, or modifying business objects in batches. Code for adding the business objects in batches may be POST /uct/v1/projects/batch-create, code for deleting the business objects in batches may be POST /uct/v1/projects/batch-delete, and code for modifying the business objects in batches may be POST /uct/v1/projects/batch-update.

When a business object to be operated is an internal object, a root object usually needs to be first found. Based on this, a service path of an API that is in the microservice and that is for operating the internal object may be represented by /{service version path}/{root object type name}s/{root object ID}/{BO}s. Correspondingly, code for operating the internal object may include an operation keyword and the service path carrying the ID of the root object.

The following provides descriptions by using a privilege object of the UCT service version v1 interface as an example. Code for obtaining an internal object list may be GET /uct/v1//roles/{role_id}/privileges. Code for adding an internal object may be POST /uct/v1/ roles/{role_id}/privileges, code for deleting an internal object may be DELETE /uct/v1/ roles/{role_id}/privileges/{privilege_id}, code for modifying an internal object may be PUT /uct/v1/ roles/{role_id}/privileges/{privilege_id}, and code for obtaining a business object may be GET /uct/v1/ roles/ { role_id } /privileges/ { privilege_id }.

Correspondingly, code for adding internal objects in batches may be POST /uct/v1/ roles/{role_id}/privileges/batch-create, code for deleting business objects in batches may be POST /uct/v1/ roles/{role_id}/privileges/batch-delete, and code for modifying business objects in batches may be POST /uct/v1/ roles/{role_id}/privileges/batch-update.

The foregoing describes operation methods for an independent business object (for example, a basic business object) and business objects in the aggregation relation. The following describes operation methods for business objects in the one-to-many relation and business objects in the many-to-many relation.

Specifically, operation paths of the business objects in the one-to-many relation are usually independent, in other words, no path dependency exists. Therefore, in comparison with the business objects in the aggregation relation, a foreign key is not created in a table (table) corresponding to {secondary} for an operation on the business objects in the one-to-many relation. In comparison with the independent business object, a column named {secondary}_id is automatically added to the table corresponding to {secondary} for the operation on the business objects in the one-to-many relation.

It should be noted that, if a relation is not defined between a root object (Root BO) and a sharding object (Sharding BO), the code management system 20 may automatically add the one-to-many relation. If the aggregation relation or the one-to-many relation is defined, a relation is not automatically added.

Operation paths of the business objects in the many-to-many relation are usually independent. This is similar to a case of the one-to-many relation. A dependency relation is generally reflected in a relational operation. A service path of an API for operating the business object may be represented by /{service version path}/{primary name}-{secondary name}-relations.

For ease of understanding, a user group UserGroup and a user User are used as an example for description. Code for creating relations in batches may be POST /uct/v1/user-group-user-relations, code for deleting relations in batches may be DELETE /uct/v1/user-group-user-relations, code for modifying relations in batches may be PUT /uct/v1/user-group-user-relations, code for querying a relation may be GET /uct/v1/user-group-user-relations, code for querying all users associated with a specific user group may be GET /uct/v1/user-groups/{id}/users, and code for querying all user groups associated with a specific user may be GET /uct/v1/users/{id}/user-groups.

In addition to the one-to-many relation, the many-to-many relation, and the aggregation relation, a relation between business objects may alternatively be the recursion relation. The recursion relation between the business objects may be maintained by using a relation object RO, or may be maintained by adding a parent node identifier parentID field to the object.

When the business object includes the parentID field, in other words, when the recursion relation is maintained not by using the relation object, code of an API for adding a business object, deleting a business object, or modifying a business object may be the same as the code of the API for adding, deleting, or modifying the independent business object.

Further, a tree relation is maintained between the business objects based on parentID. The microservice may provide an API for relation query. For example, code for obtaining a parent node may be GET ../{BO type }s/{ id}/parents, and a return value of the API is the identifier parentID of the parent node. Code for obtaining a direct child node may be GET ../{BO type} s/{id}/children, and a return value of the API is IDs of all child nodes. Code for obtaining all descendant nodes may be GET ../{BO type}s/{id}/descendants, and a return value of the API is IDs of all the descendant nodes, where the descendant nodes may also be referred to as descendant nodes, including the child node and a child node of the child node. Code for obtaining all ancestor nodes may be GET ../{BO type}s/{id}/ancestors, and a return value may be a business object identifier array, denoted as array<BusinessObject>. The array includes IDs of all the ancestor nodes, where the ancestor nodes include a parent node and a parent node of the parent node, and a position of a node in the array is in ascending order of a level.

When the recursion relation between the business objects is maintained for the business objects by using the relation object, an API for adding, deleting, or modifying the recursion relation may be implemented by using a relation table, and code of the API may be /{service version path}/{bo name}-relations.

For ease of understanding, an English object role is used as an example for description. Code for relation query may be GET /uct/v1//role-relations?parent_id=xxx&child_id=xxx, code for adding relations in batches may be POST /uct/v1/role-relations, code for modifying relations in batches may be PUT /uct/v1/role-relations, and code for deleting relations in batches may be DELETE /uct/v1/role-relations.

The foregoing describes a process in which the code management system 20 generates the code of the API. Further, the code management system 20 may generate code of an implementation method for the API, where the code is also referred to as the query resource code. In this embodiment of this application, the code management system 20 may not only generate, based on the metadata in the business model, code that is at the persistence operation layer and that is of a method for performing a simple operation on the database, but also generate, based on the metadata in the business model, code that is at the persistence operation layer and that is of a method for performing a complex operation on the database. The simple operation includes but is not limited to adding, deleting, querying, or modifying a business object, or adding, deleting, querying, or modifying a relation. The complex operation includes but is not limited to an association operation, for example, complex query such as querying all the users associated with the specific user group.

The following separately describes the code of the methods for different operations.

In a first case, the code management system 20 generates methods for a basic CRUD operation and a batch operation for a business object BO.

For ease of understanding, a business object "Person" is used as an example for description. In this example, "Person" may be defined as:

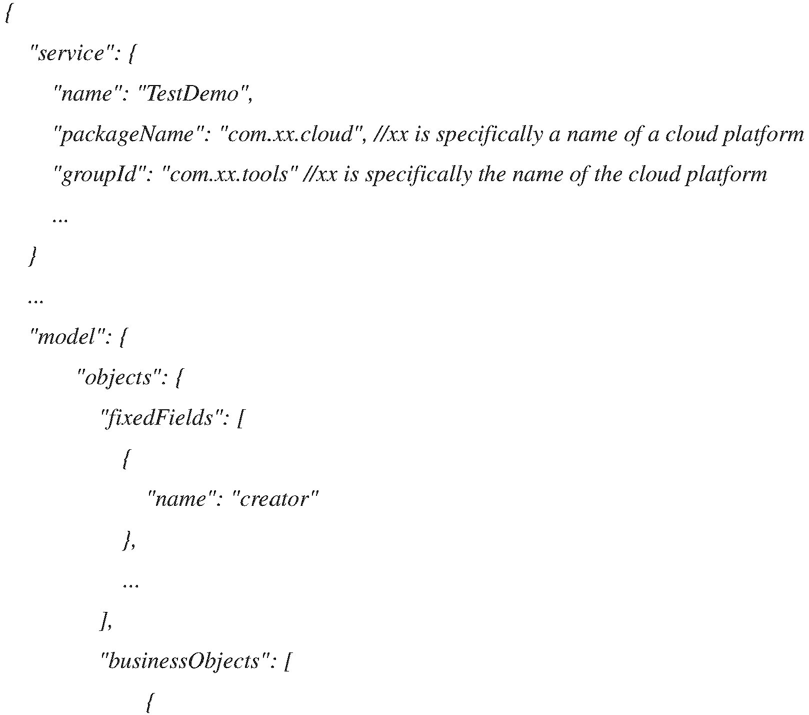

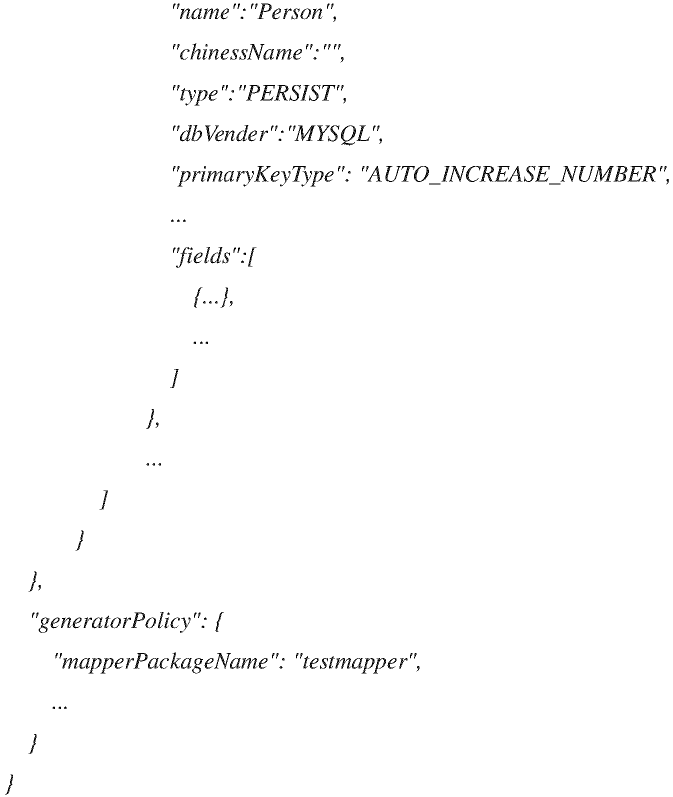

The code management system 20 may separately generate interface code and query resource code for the business object "Person" through DevSpore-codegen. The interface code is persistently stored in a DAO interface file, and a name of the file is PersonMapper.java. The query resource code is persistently stored in an SQL resource file, and a name of the SQL resource file is PersonMapper.xml.

Refer to FIG. 4. A metadata document obtained by the code management system 20 further includes service-level metadata. A field in the service-level metadata indicates a global attribute of the microservice. For example, the service-level metadata may include a name (denoted as "name") of the microservice and a package name (denoted as "packageName"). Further, the metadata document may include a code generation policy (denoted as "generatorPolicy") configured by the user via the configuration interface, and a query resource file package name (denoted as "mapperPackageName") is defined in the code generation policy. The code management system 20 may generate a package name of the DAO interface file based on the name of the microservice, the package name, and the query resource file package name in the metadata document. The package name may be represented by {service.packageName}. {generatorPolicy.mapperPackageName}. The package name of the DAO interface file may be mapped to a file system to obtain a directory structure. The DAO interface file, for example, a PersonMapper.java file, may be stored in the directory structure.

It should be noted that, when "mapperPackageName" is not configured in the metadata document, the code management system 20 may generate the package name of the DAO interface file based on a default query resource file package name, for example, "mapper". For example, when "mapperPackageName" is not configured in the metadata document, the package name of the PersonMapper.java file may be com.xxx.cloud.testdemo.mapper.PersonMapper.java. When "mapperPackageName" is configured in the metadata document, the code management system 20 generates the package name of the DAO interface file based on configured "mapperPackageName". Still using the business object "Person" as an example, "mapperPackageName" in the metadata document is configured as "testmapper". Correspondingly, the package name of the PersonMapper.java file may be com.xxx.cloud.testdemo.testmapper.PersonMapper.java.

A default location for generating the query resource file may be classpath:/mapper/. For example, a location for generating the PersonMapper.xml file may be TestDemo /base/src/main/resources/mapper/PersonMapper.xml. It should be noted that a location for generating the query resource file is generally not configurable.

A method for generating a newly added business object for a business object BO by the code management system 20 may include two scenarios, and the two scenarios are separately described below.

In a scenario, the business object is directly added. Specifically, the code management system 20 may insert one BO, and return a quantity of inserted rows, where the quantity is 1 if the insertion succeeds, and is 0 if the insertion fails. Details are as follows:

```
         Integer insert({Bo} {bo}).
```

Using the business object "Person" as an example, a method for directly adding the business object may be Integer insert(Person person).

In another scenario, the business object is added based on a condition. Specifically, the code management system 20 may insert one BO, where an attribute that is not possessed by the object is not added; and return a quantity of inserted rows, where the quantity is 1 if the insertion succeeds, and is 0 if the insertion fails. Details are as follows:

```
         Integer insertSelective({Bo} {bo}).
```

Using the business object "Person" as an example, a method for adding the business object based on the condition may be Integer insertSelective(Person person).

Further, the code management system 20 may add business objects in batches. Specifically, an operation of adding the business objects in batches is atomic, to be specific, an operation result is that all the business objects are successfully added or all the business objects fail to be added. If the operation result is that all the business objects are successfully added, a quantity of inserted rows is returned. If the operation result is that all the business objects fail to be added, 0 is returned. Details are as follows:

```
         Integer insertBatch(List<{Bo}> {bo}List).
```

Using the business object "Person" as an example, a method for adding the business objects in batches may be Integer insertBatch(List<Person> personList).

The code management system 20 may generate, for the business object BO by using a primary key, a method for deleting a business object. A quantity of deleted rows is returned in the method, where the quantity is 1 if the deletion succeeds, and is 0 if the deletion fails. Details are as follows:

```
         Integer deleteByPrimaryKey({BO.primaryKeyType} id).
```

Using the business object "Person" as an example, a method for deleting the business object may be Integer deleteByPrimary Key (Long id).

When business objects need to be deleted in batches, the code management system 20 may delete the business objects in batches by using a primary key list. This operation is atomic. If all the business objects are successfully deleted, a quantity of deleted rows is returned. It should be noted that if a primary key that does not exist is transferred, no error is reported, and the primary key is not counted among the returned quantity. The method is specifically as follows:

```
         Integer deleteByPrimaryKeys(List<{BO.primaryKeyType}> ids).
```

Using the business object "Person" as an example, a method for deleting the business objects in batches may be Integer deleteByPrimaryKeys(List<Long> ids).

The code management system 20 may generate, for the business object, a method for updating the business object, where 1 is returned if the updating succeeds, and 0 is returned if the updating fails. Details are as follows:

```
         Integer update({Bo} {bo}).
```

Using the business object "Person" as an example, a method for updating the business object may be Integer update(Person person).

The code management system 20 may alternatively update business objects in batches. The operation is atomic, and an operation result is that all the business objects are successfully updated or all the business objects fail to be updated, where a quantity of updated rows is returned if all the business objects are successfully updated, and 0 is returned if all the business objects fail to be updated. Details are as follows:

```
         Integer updateBatch(List<Bo> boList).
```

Using the business object "Person" as an example, a method for updating the business objects in batches may be Integer updateBatch(List<Person> personList).

The code management system 20 may alternatively partially update business objects. When the business object to be updated includes an attribute with no value, the attribute is not updated. An update criterion is using a primary key as a condition. 1 is returned if the updating succeeds, and 0 is returned if the updating fails or no record meets the condition. Details are as follows:

```
         Integer updateSelective({Bo} {bo}).
```

Using the business object "Person" as an example, a method for partially updating the business objects may be Integer updateSelective(Person person).

The code management system 20 may further obtain a business object by using a primary key. If the business object is null, null is returned. Details are as follows:

```
         {Bo} selectByPrimaryKey({Bo.primaryKeyType} id).
```

Using the business object "Person" as an example, a method for obtaining the business object may be Person selectByPrimary Key (Long id).

Further, the code management system 20 may obtain a business object list by using a primary key list, and return a quantity of business objects that actually exist in a primary key, where a null list is returned if none of the business objects exist. Details are as follows:

```
         List< { Bo } > selectByPrimaryKeys(List< { Bo.primaryKeyType } > ids).
```

Using the business object "Person" as an example, a method for obtaining the business object list may be List<Person> selectByPrimaryKeys(List<Long> ids).

The code management system 20 may further query a quantity of business objects based on a query criterion. The method is as follows:

```
         Long countByExample({Bo}Criteria {bo}Criteria).
```

Using the business object "Person" as an example, a method for querying the quantity of business objects based on the query criterion may be Long countByExample(PersonCriteria personCriteria).

The code management system 20 may further query a business object primary key list based on the query criterion, and a null list is returned when no business object meeting the query criterion exists. Details are as follows:

```
         List< {Bo.primaryKeyType} > selectIDsByExample({Bo}Criteria {bo} Criteria).
```

If only a primary key ID of the business object is needed, this function may be invoked to obtain the primary key ID by reading an overwrite index instead of reading a table record. In this way, performance is significantly improved compared with that in selectByExample. The user may preferably use selectIDsByExample.

Still using the business object "Person" as an example, a method for querying the business object primary key list based on the query criterion may be List<Long> selectIDsByExample(PersonCriteria personCriteria).

Similarly, the code management system may further query a business object list based on the query criterion, and a null list is returned if no business object is hit. The method is specifically as follows:

```
         List< {Bo} >selectByExample({Bo}Criteria{bo}Criteria).
```

Using the business object "Person" as an example, a method for querying the business object list based on the query criterion may be List<Person> selectByExample(PersonCriteria personCriteria).

In a second case, the business objects include a first business object and a second business object, the first business object and the second business object are in the aggregation relation. The code management system 20 may generate, based on the first business object and the second business object, a data transfer object (data transfer object, DTO) shown in FIG. 4. The code management system 20 may generate a query method for the DTO.

The code management system 20 may aggregate the first business object and the second business object to obtain the data transfer object DAT. When aggregating the first business object and the second business object, the code management system 20 may select a corresponding mode based on a requirement. For example, the code management system 20 may aggregate the first business object and the second business object in a nested (nested) mode or a Cartesian (Cartesian) mode to obtain the data transfer object.

The nested mode is to organize, by using a business object as a reference, another business object list related to the business object, to form an aggregate object. For example, an aggregate object UserRoleNested of User<-m2m->Role may be:

```
         UserRoleNested: {
           User user; List<Role> roles;
         }
```

The Cartesian mode is to aggregate attributes of business objects to be aggregated, to form an aggregate object. The aggregate object includes all attributes of the business objects in the aggregation relation, and names of the business objects are used as attribute prefixes for these attributes. For example, an aggregate object UserRoleCartesian of User<-m2m->Role may be:

```
         U serRo leCartesian {
           userId;
           userName;
           userCreator;
           user...
           roleId;
           roleName;
           role...
         }
```

The code management system 20 may generate different query methods based on different aggregation modes. The different query methods may be persistently stored by using corresponding DTO mapper files.

When the aggregation mode is the nested mode, during query, the code management system 20 may find, from BoMapper of both parties in the relation, a record that meets a condition, and then set a result in the aggregate object. For example, using query of UserRoleNested as an example, the method may be as follows:
UserRoleNested userRoleNested = new UserRoleNested();
User user = userMapper.selectByPrimaryKey(userId);
List<Role> roles = roleMapper.getRolesByUserId(userId);
userRoleNested.setUser(user); and
userRoleNested.setRole(roles).

When the aggregation mode is the Cartesian mode, the code management system 20 may directly query an aggregate object in the Cartesian mode based on a primary key of one of the business objects, for example, a primary key of a primary object or a primary key of a secondary object. The following separately describes a process of directly querying the aggregate object in the Cartesian mode based on the primary key of the primary object and a process of directly querying the aggregate object in the Cartesian mode based on the primary key of the secondary object.

A method for querying an aggregate object list based on the primary key of the primary object may be as follows:

```
         List< {Primary} {Secondary} Cartesian > get {Primary}{Secondary}CartesianBy
 {Primary}Id ({Primary.keyType} {Primary}Id).
```

Using query of UserRoleNested as an example, if the first business object is "user", and the second business object is "Role", the method for querying the aggregate object list based on the primary key of the primary object may be List<UserRoleCartesian> getUserRoleCartesianByUserId(Long userId).

A method for querying an aggregate object list based on the primary key of the secondary object may be as follows:

```
         List< {Primary} { Secondary} Cartesian> get {Primary} {Secondary}CartesianBy{Secon
 dary}I-d ({Secondary.keyType}{Secondary}Id).
```

Using query of UserRoleNested as an example, if the first business object is "user", and the second business object is "Role", a method for querying the aggregate object list based on the primary key of the secondary object may be List<UserRoleCartesian> getUserRoleCartesianByRoleId(Long roleId).

In a third case, the code management system 20 may generate a basic CRUD method and a batch operation method for the relation object RO, to manage a relation between business objects BOs. The following provides separate descriptions based on relations between BOs.

It is assumed that the many-to-many relation between User<-->Role is defined as follows:

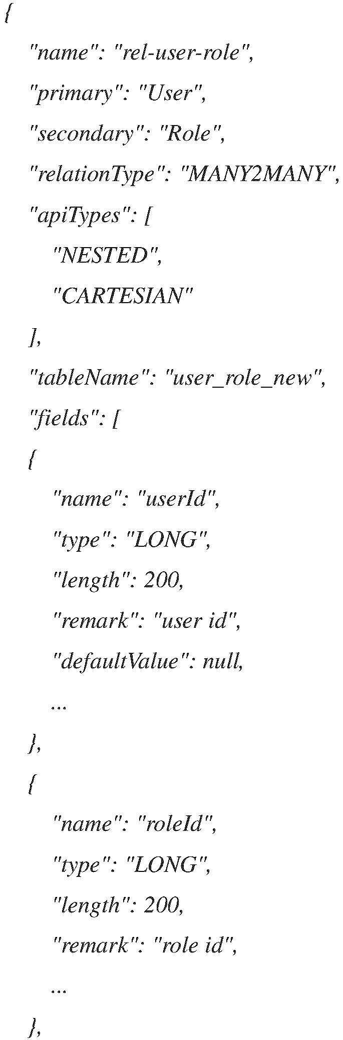

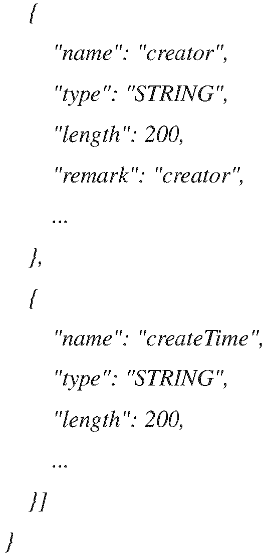

fields is a relation table field defined by the user. A relation table includes at least two fields: userId and roleId, where userId and roleld are associated with respective business objects. In addition to the foregoing two fields, another additional description field may be further added by the user, including but not limited to a creator of the relation, validation time of the relation, expiration time of the relation, or the like.

The code management system 20 may generate a DAO interface file and a query resource file for a relation operation on the relation object through DevSpore. The DAO interface file may be UserRoleRelationMapper.java, and the query resource file may be an SQL resource file UserRoleRelationMapper.xml. UserRoleRelationMapper.java may be generated in a package path {packageName}. {mapperPackageName or default mapper}, and UserRoleRelationMapper.xml may be generated in a default location, for example, classpath:/mapper. This is the same as a case of a single business object.

A method for the relation operation includes a method for adding a relation object, a method for deleting a relation object, a method for updating a relation object, or a method for querying a relation object. The following separately describes the methods for relation operation in detail.

For the method for adding a relation object, the code management system 20 may insert one RO, and return a quantity of inserted rows, where the quantity is 1 if the insertion succeeds, and is 0 if the insertion fails. Details are as follows:

```
         int insert({Primary} {Secondary}Relation relation).
```

Using the relation object UserRoleRelation as an example, a method for adding the relation object by the code management system 20 may be int insert (UserRoleRelation relation).

For the method for adding a relation object, the code management system 20 may alternatively add the relation object as required based on a relation attribute. Specifically, the code management system 20 may insert one relation conditionally based on a relation entity record. If a field exists, the corresponding field is not inserted. If the insertion succeeds, 1 is returned. If the insertion fails, 0 is returned. Details are as follows:

```
         int insertSelective({Primary} {Secondary} Relation relation).
```

Using the relation object UserRoleRelation as an example, the code management system 20 may selectively add the relation object. The method may be int insertSelective (UserRoleRelation relation).

Similar to adding the business objects in batches, the code management system 20 may add relation objects in batches. Specifically, the code management system 20 may insert the relation objects in batches based on a primary key (for example, a composite primary key including two primary keys), and return a quantity of rows of inserted relation objects. Details are as follows:

```
Integer
 insertBatch{Primary}By{Secondary}Id(List<{Primary} { Secondary } Key>relations).
```

Using the relation object UserRoleRelation as an example, a method for adding the relation object in batches may be:
UserMapper.java: Integer insertBatchUserByRoleId(List<UserRoleKey> relations);
Integer insertBatch {Secondary} By {Primary}Id(List< {Primary} {Secondary} Key> relations; and
RoleMapper.java: Integer insertBatchRoleByUserId(List<UserRoleKey> relations).

It should be noted that, when inserting the relation object in batches, the code management system 20 usually supports insertion of a primary key, but does not support insertion of information other than the primary key.

For the method for deleting a relation object, the code management system 20 may delete one record based on a primary key (for example, a composite primary key including two primary keys) of a relation table, return a quantity of deleted rows, where 1 is returned when the deletion succeeds, and 0 is returned when the deletion fails or no record meeting a condition exists. Details are as follows:

```
         Int deleteByPrimaryKey(@Param(" { Primary } Id") {Primary.keyType} {primary}Id,
 @Param("{Secondary}Id") {Secondary.keyType} {secondary}Id).
```

Using deletion of UserRoleRelation as an example, a method for deleting the relation object by the code management system 20 may be int deleteByPrimaryKey(@Param("userId") Long userId, @Param("roleId") Long roleId).

Similar to deleting the business objects in batches, the code management system 20 may delete relation objects in batches. Specifically, the code management system 20 may delete the relation objects in batches based on a primary key list, where a parameter of the method is PrimarySecondaryKey whose attribute is a foreign key; and return a quantity of deleted rows, or return 0 if no record meeting a condition exists. Details are as follows:
Integer deleteBatch{ Primary }By{ Secondary }d(List< {Primary} { Secondary} Key > relations); and
Integer deleteBatch{ Secondary }By{ Primary }d(List< {Primary} {Secondary}Key> relations).

The following uses UserRoleKey as an example to describe deletion of the relation object in batches.

In this example, UserRoleKey is specifically defined as follows:

```
         UserRoleKey{
             Long userId;
             Long roleId;
             //getter and setter
           }
```

Then, the code management system 20 may generate the following code to delete UserMapper.java based on PrimaryKey and delete RoleMapper.java based on SecondaryKey. Details are as follows:
UserMapper.java:
   Integer deleteBatchUserByRoleId(List<UserRoleKey> relations);
RoleMapper.j ava:
   Integer deleteBatchRoleByUserId(List<UserRoleKey> relations).

The code management system 20 may further generate, for the relation object, a method for updating the relation object. Specifically, the code management system 20 may update one record based on a primary key. If the update succeeds, 1 is returned; if the update fails or no record meets a condition, 0 is returned. Details are as follows:

```
         int update({Primary} { Secondary} Relation record).
```

Using the relation object UserRoleRelation as an example, a method generated by the code management system 20 for updating the relation object may be int update(UserRoleRelation record).

The code management system 20 may alternatively update the relation object as required based on an attribute. An updating criterion may be using a composite primary key as a condition. If another attribute is not configured, content is not updated. 1 is returned if the updating succeeds, and 0 is returned if the updating fails or no record meets the condition. Details are as follows:

```
         int updateSelective({Primary} {Secondary}Relation record).
```

Using the relation object UserRoleRelation as an example, a method for updating the relation object as required based on an attribute by the code management system 20 may be int updateSelective(UserRoleRelation record).

The code management system 20 may query a quantity of relation objects that meet the condition. If no record meets the condition, 0 is returned. Otherwise, the quantity of relation objects that meet the condition is returned. Details are as follows:

```
         long countByExample({Primary} {Secondary}RelationCriteria example).
```

Using the relation object UserRoleRelation as an example, a method for querying, by the code management system 20, the quantity of relation objects that meet the condition may be long countByExample(UserRoleRelationCriteria example).

The code management system 20 may further query a relation record that meets a condition. Specifically, the code management system 20 may query, based on a given relation attribute condition, a relation record that meets the condition, and return a relation record that meets the condition. If no relation record that meets the condition exists, a null list is returned. Details are as follows:

```
         List< {Primary} { Secondary } Relation> selectByExample({Primary}{Secondary}Relat
 ion Criteria example).
```

Using the relation object UserRoleRelation as an example, a method for querying, by the code management system 20, the relation record that meets the condition may be List<UserRoleRelation> selectByExample(UserRoleRelationCriteria example).

The code management system 20 may alternatively query the relation record based on a primary key (for example, a composite primary key), and return a found relation record. If no relation record is found, null is returned. Details are as follows:

```
         {Primary}{Secondary} RelationselectByPrimaryKey(@Param(" { Primary } Id") {Prima
         ry. KeyType }{primary}Id, @Param("{Secondary}Id") {Secondary.keyType} {secondary}Id).
```

Using the relation object UserRoleRelation as an example, a method for querying the relation record based on the primary key by the code management system 20 may be UserRoleRelation selectByPrimaryKey(@Param("userId") Long userId, @Param("roleId") Long roleId).

The code management system 20 may query relation objects in batches. Specifically, the code management system 20 may query relation information in batches based on a plurality of primary keys (a composite primary key), where a parameter is a relation object, and an attribute of the relation object includes a primary key. During the query, the primary key is used as a condition. If no record that meets the condition exists, a null list is returned. Details are as follows:

```
         List<Primary } { Secondary } Relation>selectByPrimaryKeys(List<Primary} {Secondar
         y} Relation>ids).
```

Using the relation object UserRoleRelation as an example, a method for querying the relation objects in batches by the code management system 20 may be List<UserRoleRelation> selectByPrimaryKeys(List<UserRoleRelation> ids).

Further, the code management system 20 may query, based on an ID of one of two parties in the relation, an associated business object list of the other party. For example, the code management system 20 queries a business object list of a local party based on an ID of an opposite party in the relation, and returns the found business object list of the local party. If no record meets a condition, a null list is returned. Details are as follows:

```
         List< {Primary} > get{Primary}By{Secondary}Id({Secondary}.keyType id).
```

Using the relation object UserRoleRelation as an example, a method for querying the business object list of the local party by the code management system 20 based on the ID of the opposite party may be:
UserMapper.java:
   List<User> getUsersByRoleId(Long id);
   List< {Secondary} > get{Secondary}By{Primary}Id({Primary}.keyType id)
RoleMapper.j ava:
   List<Role> getRolesByUserId(Long id).

The code management system 20 may query, based on the ID of the opposite party in the relation, an associated business object primary key list of the local party, and return the found business object primary key list of the local party. If no record meeting a condition exists, a null list is returned. Details are as follows:

```
         List< {Primary} .keyType> get{ Primary} IdsBy{Secondary} Id({ Secondary} id).
```

Using the relation object UserRoleRelation as an example, a method for querying, by the code management system 20 based on the ID of the opposite party in the relation, the associated business object primary key list of the local party may be:
UserMapper.java:
   List<Long> selectUserIdsByRoleId(Long id);
   List< { Secondary } .keyType>get { Secondary} IdsBy {Primary}Id({Primary}id);
roleMapper.java:
   List<Long> selectRoleIdsByUserId(Long id).

For the recursion relation in the many-to-many relation, the code management system 20 may further generate the following method for the recursion relation: querying a child business object based on a primary key, querying a parent business object based on the primary key, querying a child business object primary key based on the primary key, and querying a parent business object primary key based on the primary key.

The code management system 20 queries the child business object in the recursion relation based on the primary key (because a storage process cannot be applied, only one layer of relation can be queried in the current method). If no child business object exists, null is returned. Details are as follows:

```
         List< {Bo}>getChild{Bo}sById({Bo.keyType} {bo}Id).
```

Descriptions are provided by using Roles as a current business object. A method for querying the child business object by the code management system 20 based on the primary key may be List<Role> getChildRolesById(Long roleId).

Similarly, the code management system 20 queries the parent business object in the recursion relation based on the primary key (because a storage process cannot be applied, only one layer of relation can be queried in the current method). If no parent business object exists, null is returned. Details are as follows:

```
         List<{Bo}> getParent{Bo}sById({Bo.keyType} {bo}Id).
```

Descriptions are provided by using Roles as a current business object. A method for querying the parent business object in the recursion relation by the code management system 20 based on the primary key may be List<Role> getParentRolesById(Long roleId).

The code management system 20 may further query the child business object primary key in the recursion relation based on the primary key (because a storage process cannot be applied, only one layer of relation can be queried in the current method). If no child business object primary key exists, null is returned. Details are as follows:

```
         List<{Bo}> get{Bo}ChildIdsById({Bo.keyType} {bo}Id).
```

Descriptions are provided by using Roles as a current business object. A method for querying the child business object primary key in the recursion relation by the code management system 20 based on the primary key may be List<Long> selectRoleChildIdsById(Long id).

The code management system 20 queries the parent business object primary key in the recursion relation based on the primary key (because a storage process cannot be applied, only one layer of relation can be queried in the current method). If no parent business object primary key exists, null is returned. Details are as follows:

```
         List<{Bo}> get{Bo}ParentIdsById({Bo.keyType} {bo}Id).
```

Descriptions are provided by using Roles as a current business object. A method for querying the parent business object primary key in the recursion relation by the code management system 20 based on the primary key may be List<Long> selectRoleParentIdsById(Long id).

For three business objects, two relation objects may be constructed. When the two relation objects include a same business object, for example, both Person-o2m->User and User<-m2m->Role include a business object User, the code management system 20 may generate, for a business object (for example, Role), a method for querying, based on a primary key of another business object (for example, Person) and by using the common business object (for example, User), the indirectly associated business object Role and a primary key corresponding to Role.

For another example, if a relation object Company aggregate->CompanyAccount and a relation object Workspace o2m->Company include a business object Company, the code management system 20 may generate, for Company Account, a method for querying, based on a primary key of Workspace and by using Company, the indirectly associated business object Company Account and a primary key.

In some possible implementations, the code management system 20 may generate a method for querying a business object record of an opposite party based on two relation objects by using an intermediate business object, and return a null list if no record that meets a condition exists. Details are as follows:

```
    List<{Bo}> get{Bo}sThru{SecondBo}By{ThirdBo}Id({ThirdBo.keyType} {thirdBo}Id).
```

Using Person-o2m->User and User<-m2m->Role as an example, the method generated by the code management system 20 for querying the business object record of the opposite party may be:
RoleMapper.java:
   List<Role> getRolesThruUserByPersonId(Long personId);
Company Account.java:
   List<CompanyAccount>getCompanyAccountsThruCompanyByWorkspaceId(Long workspaceId)

When the two relation objects constructed based on the three business objects include the same business object, for example, Person-o2m->User and User<-m2m->Role include the business object User, where User and Role are in the many-to-many relation, the code management system 20 generates, for Role, a method for querying, based on a primary key of Person and by using User, the indirectly associated business object Role and a target object with UserId, namely, RoleWithUserId.

The code management system 20 may generate a method for querying, based on the two relation objects and by using an intermediate business object, a business object primary key record of an opposite party; and return a null list if no record that meets a condition exists, or generate, if a relation between a found target object and the intermediate business object is the many-to-many relation, a method for querying a target object with an intermediate object primary key. Details are as follows:

```
         List<{Bo}With{SecondBo } Id>get {Bo} sThru { SecondBo } By { ThirdBo }Id2({ ThirdB
 o.key Type} {thirdBo} Id).
```

Using Person-o2m->User and User<-m2m->Role as an example, a method generated by the code management system 20 for querying a business object primary key record of an opposite party may be:
roleMapper.java:
List<RoleWithUserId> getRolesThruUserByPersonId2(Long personId).

In some possible implementations, the code management system 20 may further receive a component extension policy configured by the user via the configuration interface. As shown in FIG. 4, the metadata document further includes the component extension policy. The code management system 20 may further generate code of an extended component of the microservice based on the business model of the microservice and according to the component extension policy. The extended component may include one or more of an authentication component, a validation component, a probe component, and an annotation configuration component.

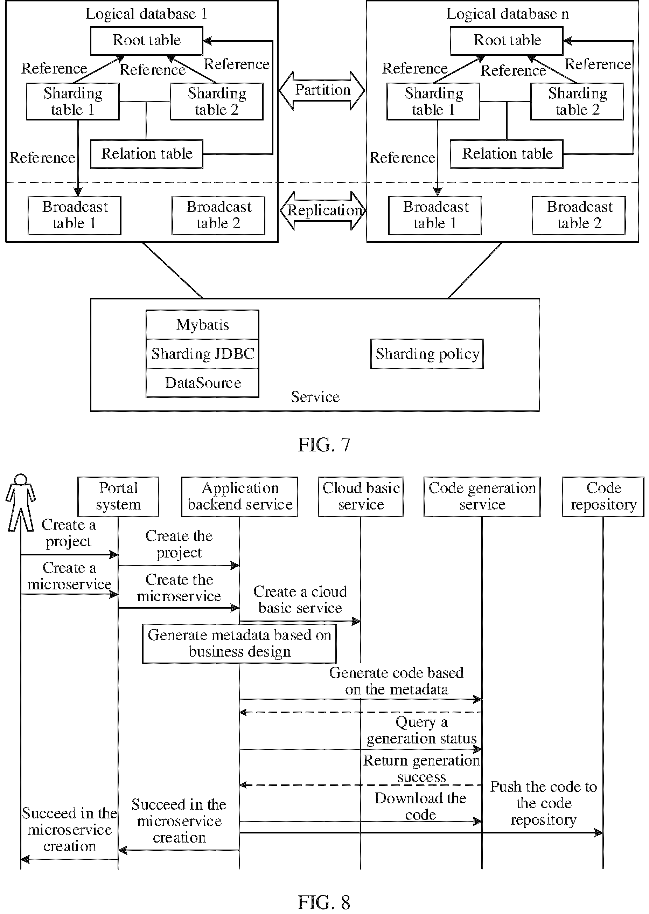

A database model designed based on a business object is further defined in embodiments of this application, and the database model is a sharding model. Refer to FIG. 7, namely, a diagram of a structure of a database model. The database model, for example, a logical database 1 to a logical database, includes a root table object and a sharding object. The root table object may be denoted as a root table, and the sharding object may be denoted as a sharding table. The user may preconfigure an object type to provide a basis for a subsequent sharding operation, to implement a convenient sharding operation.

The foregoing describes the method for generating the code of the microservice by the code management system 20. The code of the microservice includes a plurality of layers of code. The code management system 20 may further generate a code directory of the microservice. The code directory includes a plurality of subdirectories, and the plurality of subdirectories are in one-to-one correspondence with the plurality of layers of code.

Based on the foregoing content descriptions, this embodiment of this application provides the microservice creation method. In the method, the code management system 20 generates, according to a domain-driven design concept, the code of the microservice based on the user-defined business model, and specifically, based on the metadata of the business objects and the metadata of the relation object that identifies the business objects in the business model, to resolve a problem that simple code at a specific layer is generated through a code generation tool or a functional module built in a development platform. This improves development efficiency. In addition, the method allows the user to flexibly define the business model, has good extensibility, and can complete full-link connection of microservice development, resolve a large amount of framework development work at an early stage of the microservice development, and resolve cloud service interconnection, deployment system interconnection, middleware support, architecture design in a high-performance and high-reliability scenario, and the like, to provide a mature product-level solution to a developer.

The following describes the microservice creation method in embodiments of this application with reference to a specific application scenario.

Refer to FIG. 8, namely, a flowchart of a microservice creation method. The method includes the following steps.

Step 1: A user triggers a project creation operation through a portal (portal) system; and in response to the project creation operation, the portal system sends a project creation instruction to an application backend service, so that the application backend service creates a project.

The project may be an application, and the application may include one or more microservices. The microservice may be interconnected with various cloud services, such as a database, storage, a log, monitoring, and load balancing, and is provided together with the cloud service as components for the user to use.

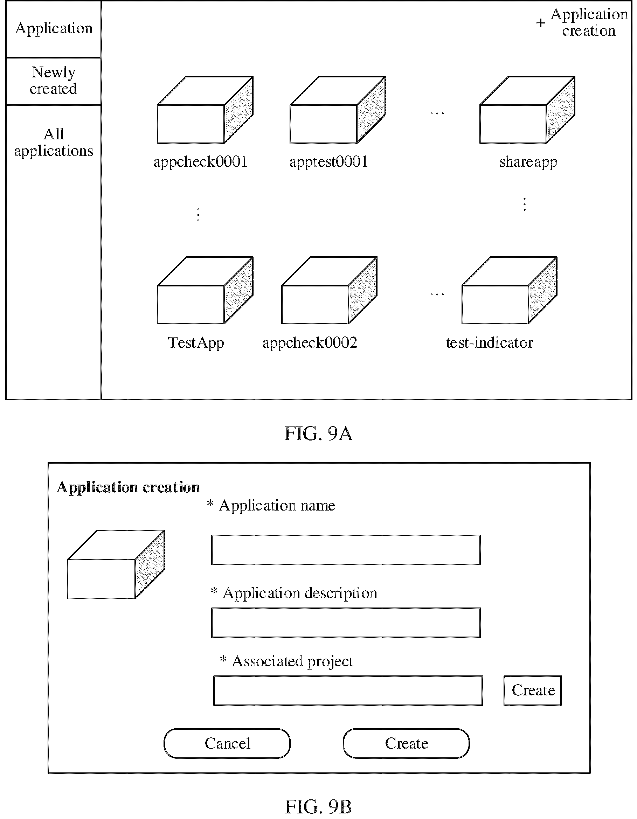

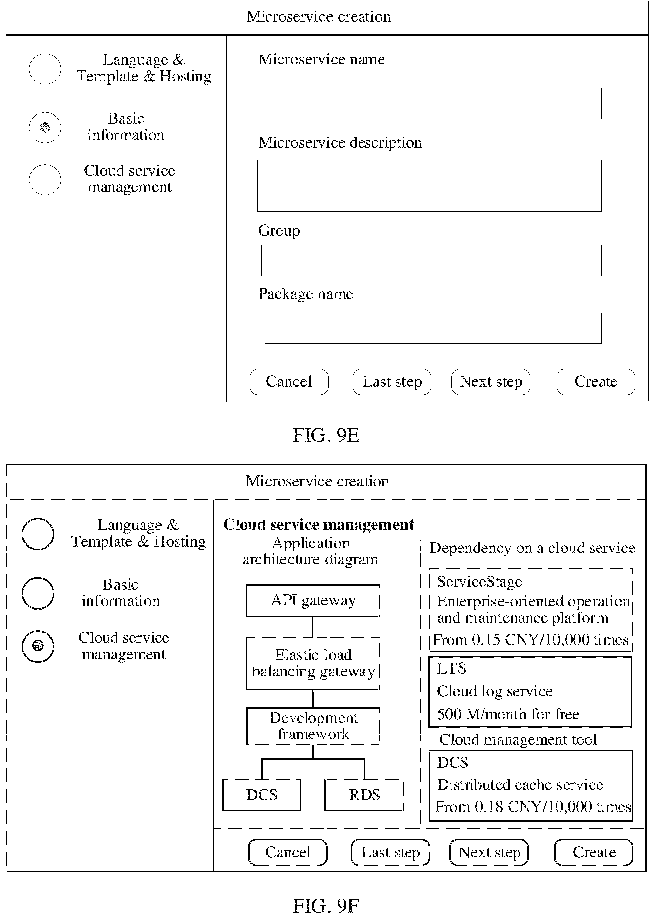

Refer to FIG. 9A, namely, a diagram of an application creation interface provided by the portal system. The application creation interface includes an application creation control. The user triggers the application creation control to trigger an operation of creating the project or the application. Correspondingly, the portal system may send the project creation instruction to the application backend service in response to the foregoing operation of the user. Then, refer to FIG. 9B, namely, a diagram of an application configuration interface provided by the portal system. The user may quickly create the application through simple configuration, for example, on an application name, an application description, and an associated project (used as a template for creating the application).

Step 2: The user triggers a microservice creation operation through the portal system; and the portal system creates a microservice in response to the microservice creation operation, and applies to a basic service of a cloud platform for a basic service corresponding to the microservice.

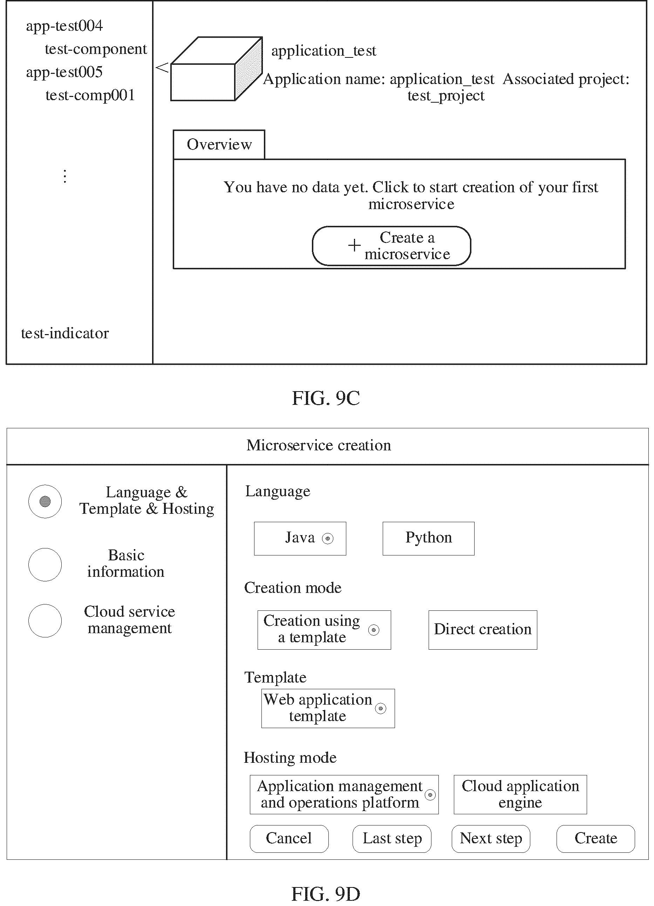

In this embodiment, the microservice may be provided to the user in a form of a component. Refer to FIG. 9C, namely, a diagram of a microservice creation interface. The microservice creation interface includes a component creation control. When the control is triggered, a microservice configuration interface shown in FIG. 9D to FIG. 9F may be jumped to. The user may perform simple configuration via the microservice configuration interface, to quickly create the microservice.

As shown in FIG. 9D to FIG. 9F, the user may configure, via the microservice configuration interface, a development language, an application template, an application hosting mode, basic application information (such as a component name, a component description, a group, and a package name), selection of an interconnected cloud service system (including an application hosting system, a log system, a monitoring system, a link call system, and the like), application of a cloud service (including a database, a cache, load balancing, an API gateway, a container cluster, and the like), and the like.

Step 3: The application backend service obtains metadata of a business model based on business design, and then invokes a code generation service to generate code of the microservice through the code generation service based on the metadata of the business model, to create the microservice.

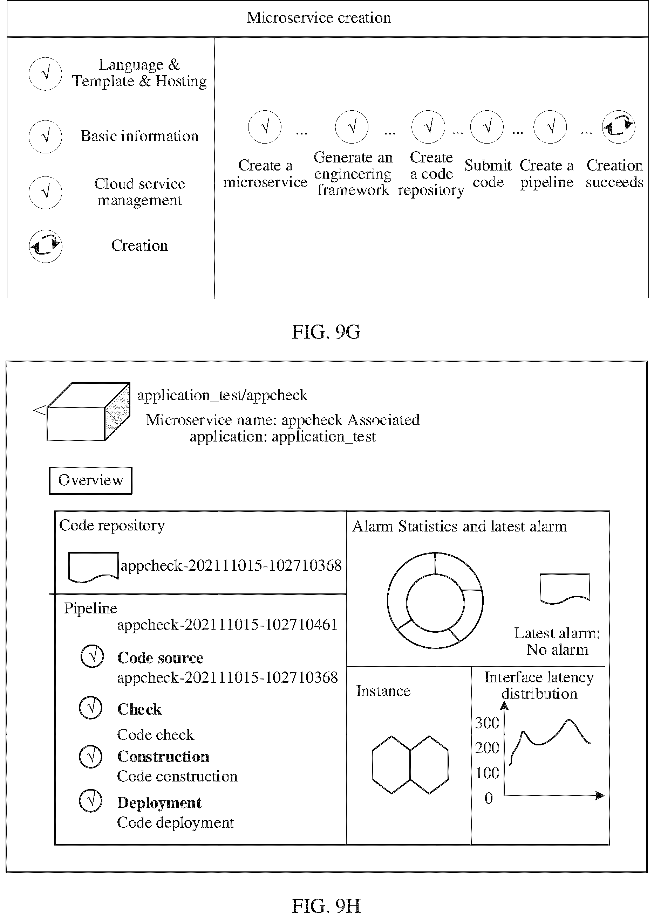

Then, refer to FIG. 9G, namely, a schematic flowchart of microservice creation. After the user completes the foregoing configuration via the configuration interface, the application backend service may create a component, generate an engineering framework, create a code repository, submit code, and create a pipeline until the creation succeeds. When invoking the code generation service to generate the code of the microservice, the application backend service may further query a code generation status, and submit the code to the code repository when the code generation status is success. After the creation succeeds, information, such as the code repository and the pipeline, about the microservice may be displayed in an overview area in an interface in FIG. 9H. Further, the overview area may display alarm statistics information and a latest alarm, so that the user can adjust the code of the microservice based on the alarm statistics information or the latest alarm. In addition, the overview area may further display a quantity of instances and interface latency distribution, to adjust a deployment status based on the interface latency distribution.

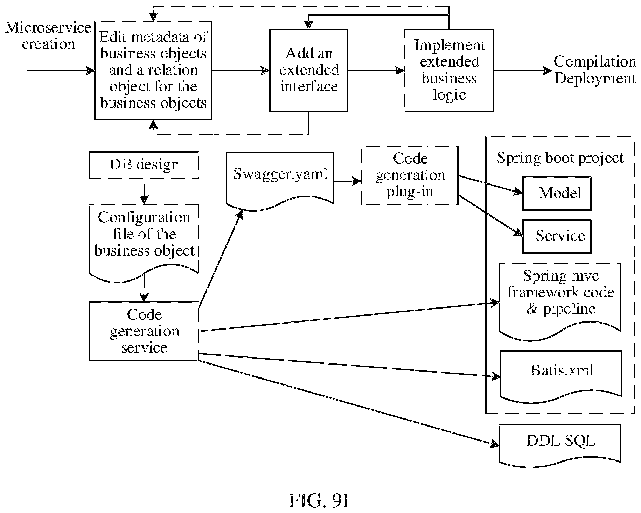

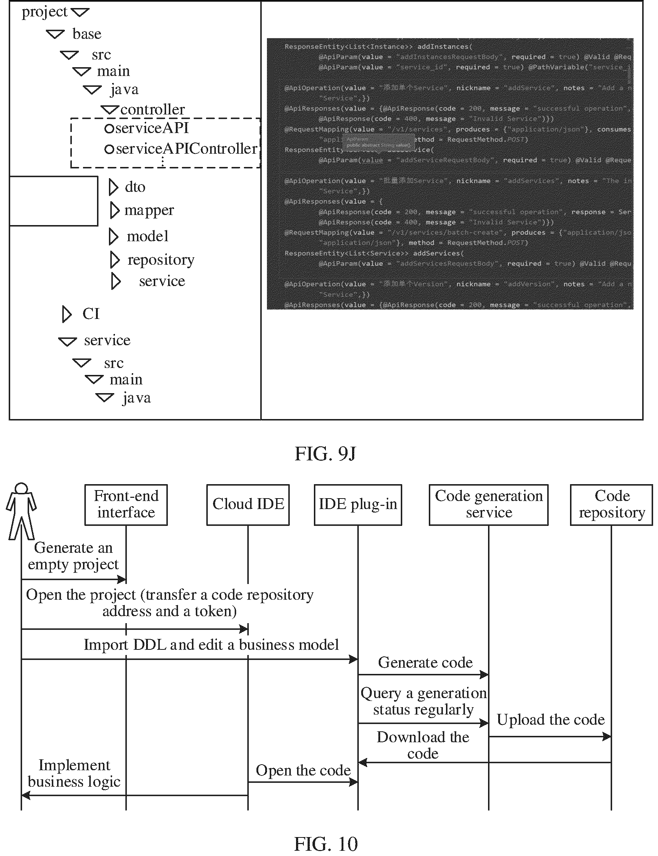

FIG. 9I and FIG. 9J respectively show a code generation procedure and a code generation result. As shown in FIG. 9I, the user may trigger a microservice creation operation, and then configure metadata of business objects and metadata of a relation object via a configuration interface of the portal system. The code generation service may automatically generate code based on the metadata. It should be noted that, the code generation service may generate one or more of spring mvc framework code, pipeline code, data persistence operation layer code (for example, batis.xml), and data definition language (Data Definition Language, DDL) code in a structured query language (Structured Query Language, SQL) query statement based on the metadata in a configuration file. The code generation service may further generate an intermediate file based on the metadata in the configuration file, for example, generate swagger.yaml, and then generate one or both of service layer code and model layer code through a code generation plug-in in the code generation service based on the intermediate file. Further, the user may add an extended interface, and implement extended business logic, to generate code of an extended component of the microservice. The extended component includes one or more of an authentication component, a validation component, a probe component, and an annotation configuration component. FIG. 9J shows each layer of code that is of the microservice and that is generated by the code generation service based on a code layering specification and a directory generated based on a directory specification.

Code generation is integrated into a whole application development process in the method, and can be provided to an enterprise or a developer for use. The application is created in a process-based manner, so that services for application creation are automatically interconnected, thereby improving creation efficiency.

Next, refer to FIG. 10, namely, a flowchart of a microservice creation method. The method includes the following steps.

Step 1: A user triggers, through a frontend interface, for example, a portal system or a client, an operation of generating an empty project. Then, the user transfers a code repository address and a token to a cloud IDE to open the project, and imports DDL to an IDE plug-in to edit business.

Step 2: The IDE plug-in invokes a code generation service based on metadata that is of a business model and that is edited by the user, to generate code of a microservice.

Step 3: A code generation microservice uploads code to the code repository, the IDE plug-in downloads the code from the code repository, and the cloud IDE opens the downloaded code from the IDE plug-in, to implement business logic.

The following describes a usage procedure for the IDE plug-in in detail.

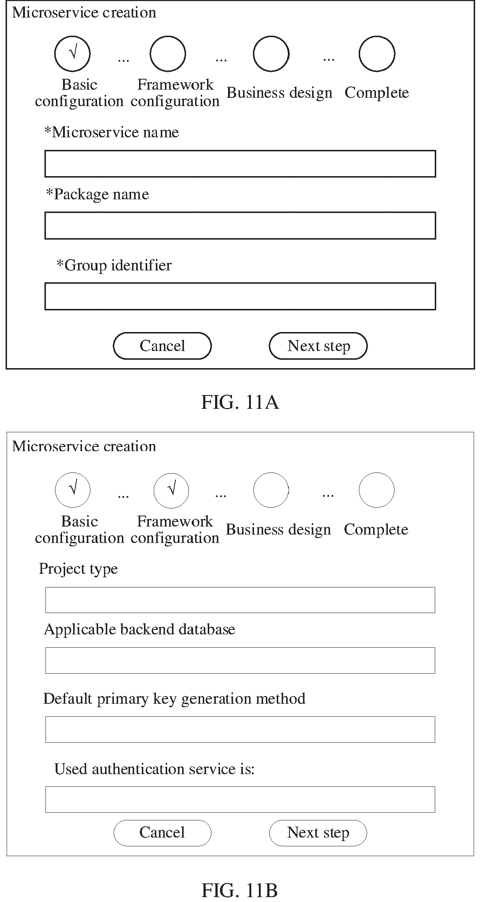

Refer to FIG. 11A and FIG. 11B, namely, diagrams of a microservice configuration interface. The user may configure basic project information such as a microservice name, a group identifier (group ID), and a version via the microservice configuration interface shown in FIG. 11A, and configure a framework component, for example, a database component, an authentication service component, an authentication service component, and a cache service component, via the microservice configuration interface shown in FIG. 11B.

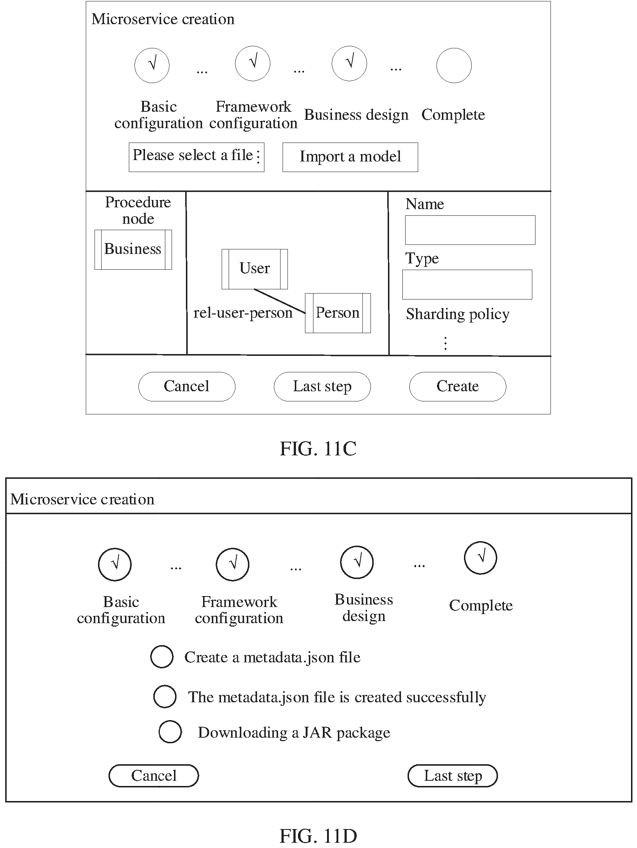

Next, refer to FIG. 11C, namely, a diagram of a microservice business design interface. The interface supports design from scratch, also supports design performed by importing existing data, and is specifically for designing a business object and a relation between business objects. The relation is represented by a connection line. The user defines an attribute of the connection line to design the relation.

Then, refer to FIG. 11D, namely, a diagram of a creation procedure interface. The code generation service generates code based on business design, and the user loads the code in the IDE to open the project, to implement the business logic.

An application creation process is embedded into the IDE plug-in in the method, and a developer only needs to download the plug-in from a plug-in market and install the plug-in for use. This improves user convenience in use, and improves user friendliness.

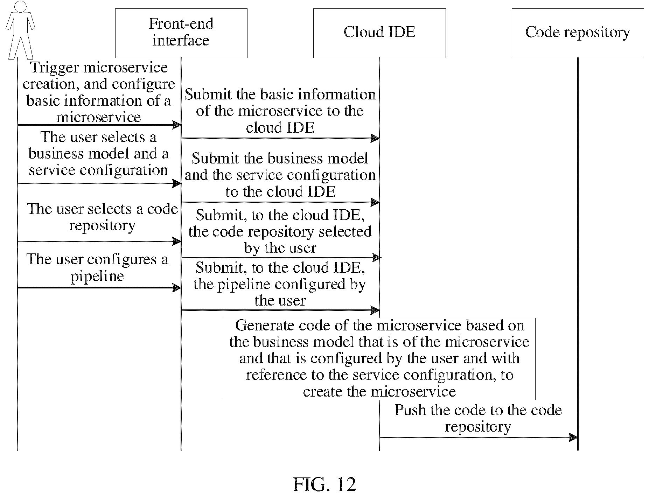

Next, refer to FIG. 12, namely, a flowchart of a microservice creation method. The method includes the following steps.

Step 1: A user triggers a microservice creation operation, and configures basic information of a microservice.

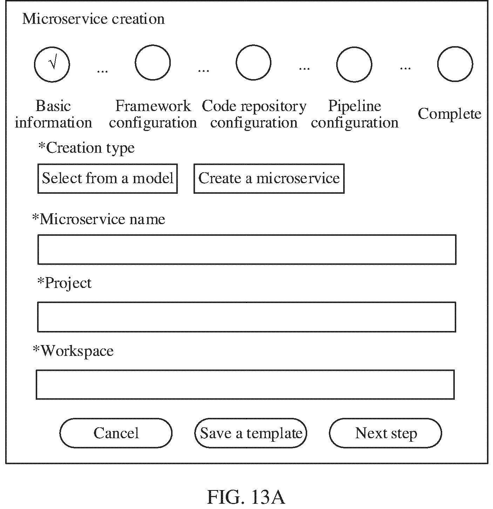

Refer to FIG. 13A, namely, a diagram of a microservice configuration interface. The user may configure one or more of a creation type, a microservice name, a project, a workspace, a service number, and a description via the microservice configuration interface, where the creation type includes creating the microservice or selecting the microservice from a UADP. The project is an application to which the microservice belongs.

Step 2: The user selects a business model and a service configuration.

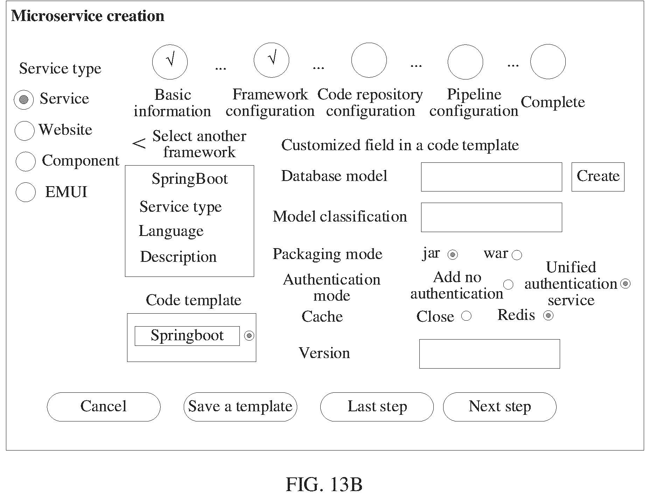

Refer to FIG. 13B, namely, a diagram of a microservice configuration interface. The user may configure a framework configuration via the microservice configuration interface. The framework configuration specifically includes a service type and a code template. The code template includes a customized field, for example, a database model, a model branch, a packaging mode, an authentication mode, a cache mode, a version, and a group ID.

In the customized field in the code template, a data model designed by DbDesigner may be selected for the "database model". Alternatively, "Create" after a "database model" drop-down list may be clicked to create an empty database model to create the microservice.

Step 3: The user selects a code repository.

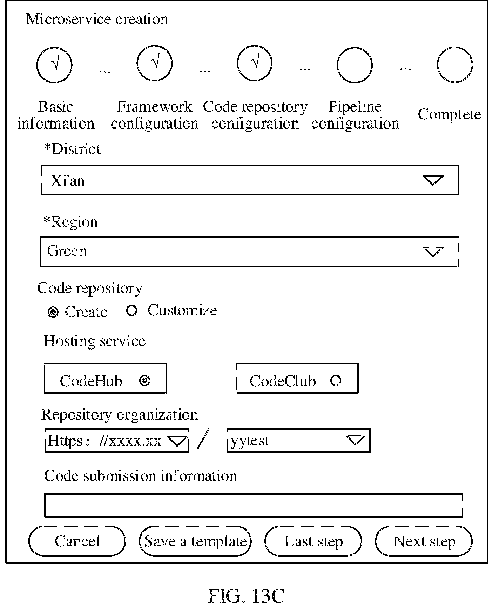

Refer to FIG. 13C, namely, a diagram of a microservice configuration interface. The user may configure a code repository via the interface. Specifically, the user selects a needed repository type and a needed repository organization. If the organization does not exist, the user may directly manually enter an organization name, and the organization is synchronously created in the code repository when the microservice is created.

Step 4: The user configures a pipeline to create the microservice.

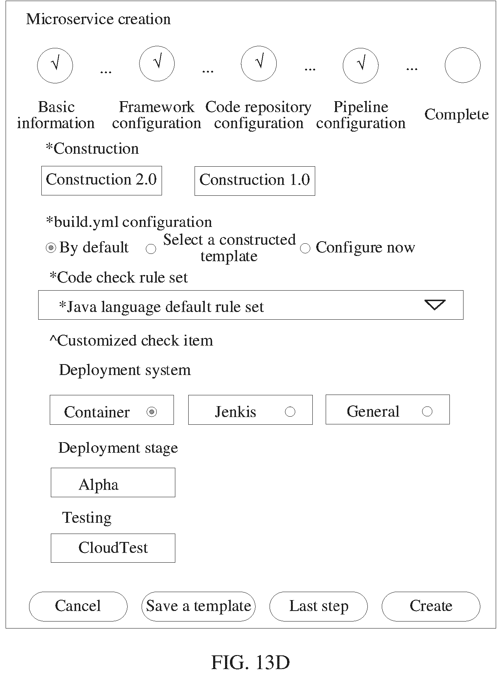

When "Create pipeline now" is selected in the interface in FIG. 13C, the pipeline may be configured in an interface in FIG. 13D. Specifically, the user may select a code check rule set and a deployment system via the microservice configuration interface in FIG. 13D. When the deployment system is configured as container, it indicates that containerized deployment is applied. When the deployment system is configured as general, it indicates that virtual machine deployment is applied.

In the method, application creation is service-oriented, and the data model can be directly imported at a frontend to create an application. This ensures consistency of business design, and the code of the microservice in the application can be directly generated based on the business design, to improve microservice creation efficiency.

Based on the microservice creation method provided in embodiments of this application, embodiments of this application further provide the foregoing code management system 20. From a perspective of function modularization, the following describes the code management system 20 provided in embodiments of this application with reference to the accompanying drawings.

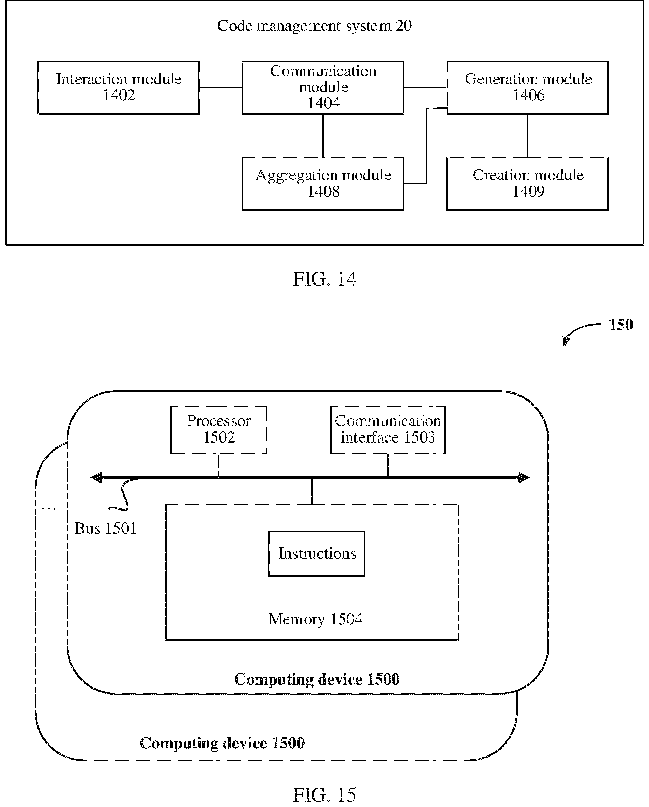

Refer to FIG. 14, namely, a diagram of a structure of the code management system 20. The system 20 includes:
an interaction module 1402, configured to present a configuration interface to a user;
a communication module 1404, configured to receive a business model that is of a microservice and that is configured by the user via the configuration interface, where the business model includes metadata of a plurality of business objects and metadata of a relation object that identifies a relation between the plurality of business objects; and
a generation module 1406, configured to generate code of the microservice based on the business model of the microservice.

In some possible implementations, the generation module 1406 is specifically configured to:
generate base module code and extension module code based on the business model of the microservice, where the base module code is incapable of being modified by the user, the extension module code is capable of being modified by the user, and the base module code is separated from the extension module code.

In some possible implementations, the code of the microservice includes at least one of code at a controller layer, code at a business logic layer, code at a data aggregation layer, code at a data persistence operation layer, and code at a database entity layer.

In some possible implementations, the generation module 1406 is specifically configured to:
generate the code at the data persistence operation layer of the microservice based on the metadata of the business object or the metadata of the relation object, where the code at the data persistence operation layer of the microservice includes interface code and query resource code.

In some possible implementations, the relation between the plurality of business objects includes one or more of a one-to-many relation, a many-to-many relation, a recursion relation, or an aggregation relation.

In some possible implementations, the plurality of business objects include a first business object and a second business object, a relation between the first business object and the second business object is the aggregation relation, and the system 20 further includes:
an aggregation module 1408, configured to aggregate the first business object and the second business object to obtain a data transfer object.

The generation module 1406 is specifically configured to:
generate the query resource code for the data transfer object.

In some possible implementations, the aggregation module 1408 is specifically configured to:
aggregate the first business object and the second business object in a nested mode or a Cartesian mode to obtain the data transfer object.

In some possible implementations, the business model further includes metadata of an extended application programming interface API, and the generation module 1406 is further configured to:
generate code of the extended API based on the metadata of the extended API.

In some possible implementations, the communication module 1404 is further configured to:
receive a code generation policy configured by the user via the configuration interface.

The generation module 1406 is specifically configured to:
generate the code of the microservice based on the business model of the microservice and according to the code generation policy.

In some possible implementations, the code generation policy includes creation or inheritance.

In some possible implementations, the communication module 1404 is further configured to:
receive a component extension policy configured by the user via the configuration interface.

The generation module 1406 is specifically configured to:
generate code of an extended component of the microservice based on the business model of the microservice and according to the component extension policy.

In some possible implementations, the extended component includes one or more of an authentication component, a validation component, a probe component, and an annotation configuration component.

In some possible implementations, the system 20 further includes:
a creation module 1409, configured to create a database model, where the database model includes a root table object and a sharding object.

In some possible implementations, the code of the microservice includes a plurality of layers of code, and the generation module 1406 is further configured to:
generate a code directory of the microservice, where the code directory includes a plurality of subdirectories, and the plurality of subdirectories are in one-to-one correspondence with the plurality of layers of code.

It should be noted that the code management system 20 may include a code generation apparatus 202 and a code management apparatus 204. The interaction module 1402, the communication module 1404, the generation module 1406, the aggregation module 1408, and the creation module 1409 may be functional modules in the code generation apparatus 202. The modules of the code generation apparatus 202 are configured to implement the microservice creation method in embodiments of this application. Further, the code management system 20 may include a pipeline management module, a running governance module, and an operation and maintenance management module (not shown in FIG. 14). These modules may be modules in the code management apparatus 204, and are configured to implement functions such as automatic pipeline generation, microservice governance, and microservice operation and maintenance.

The code management system 20 according to this embodiment of this application may correspondingly perform the method described in embodiments of this application, and the foregoing and other operations and/or functions of the modules/units of the code management system 20 are separately intended to implement corresponding procedures of the methods in the embodiment shown in FIG. 3. For brevity, details are not described herein again.

An embodiment of this application further provides a computing device cluster. The computing device cluster includes at least one computing device, and any one of the at least one computing device may be from a cloud environment or an edge environment, or may be a terminal device. The computing device cluster is specifically configured to implement a function of the code management system 20 in the embodiment shown in FIG. 14.

FIG. 15 is a diagram of a structure of a computing device cluster. As shown in FIG. 15, the computing device cluster 150 includes a plurality of computing devices 1500, and the computing device 1500 includes a bus 1501, a processor 1502, a communication interface 1503, and a memory 1504. The processor 1502, the memory 1504, and the communication interface 1503 communicate with each other via the bus 1501.

The bus 1501 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is used to represent the bus in FIG. 15, but this does not mean that there is only one bus or only one type of bus.

The processor 1502 may be any one or more of processors such as a central processing unit (central processing unit, CPU), a graphics processing unit (graphics processing unit, GPU), a microprocessor (microprocessor, MP), or a digital signal processor (digital signal processor, DSP).

The communication interface 1503 is configured to communicate with outside. For example, the communication interface 1503 is configured to: receive a business model that is of a microservice and that is configured by a user via a configuration interface, receive a code generation policy configured by the user via the configuration interface, and receive a component extension policy configured by the user via the configuration interface.

The memory 1504 may include a volatile memory (volatile memory), for example, a random access memory (random access memory, RAM). The memory 1504 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1504 stores computer-readable instructions, and the processor 1502 executes the computer-readable instructions, to enable the computing device cluster 150 to perform the foregoing microservice creation method (or implement a function of the foregoing code management system 20).

Specifically, when the embodiment of the system shown in FIG. 14 is implemented, and functions of the modules such as the interaction module 1402, the communication module 1404, the generation module 1406, the aggregation module 1408, and the creation module 1409 of the code management system 20 described in FIG. 14 are implemented by software, the software or program code needed for executing the functions of the modules in FIG. 14 may be stored in the at least one memory 1504 in the computing device cluster 150. The at least one processor 1502 executes the program code stored in the memory 1504, so that the computing device cluster 150 performs the foregoing microservice creation method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device or a computing device cluster to perform the foregoing microservice creation method.

An embodiment of this application further provides a computer program product. The computer program product includes one or more computer instructions. When the computer instructions are loaded and executed on a computing device, the procedures or functions according to embodiments of this application are all or partially generated. The computer instructions may be stored in a computer-readable storage medium, or may be transmitted from one computer-readable storage medium to another computer-readable storage medium. For example, the computer instructions may be transmitted from a website, a computing device, or a data center to another website, computing device, or data center in a wired (for example, a coaxial cable, an optical fiber, or a digital subscriber line (DSL)) or wireless (for example, infrared, radio, or microwave) manner. The computer program product may be a software installation package. When any one of the foregoing microservice creation methods needs to be applied, the computer program product may be downloaded and executed on a computing device or a computing device cluster.

Descriptions of procedures or structures corresponding to the accompanying drawings have respective focuses. For a part that is not described in detail in a procedure or structure, refer to related descriptions of other procedures or structures.

## Claims

1. A microservice creation method, wherein the method comprises:
presenting a configuration interface to a user;
receiving a business model that is of a microservice and that is configured by the user via the configuration interface, wherein the business model comprises metadata of a plurality of business objects and metadata of a relation object that identifies a relation between the plurality of business objects; and
generating code of the microservice based on the business model of the microservice.

2. The method according to claim 1, wherein the generating code of the microservice based on the business model of the microservice comprises:
generating base module code and extension module code based on the business model of the microservice, wherein the base module code is incapable of being modified by the user, the extension module code is capable of being modified by the user, and the base module code is separated from the extension module code.

3. The method according to claim 1 or 2, wherein the code of the microservice comprises at least one of code at a controller layer, code at a business logic layer, code at a data aggregation layer, code at a data persistence operation layer, and code at a database entity layer.

4. The method according to claim 3, wherein the generating code of the microservice based on the business model of the microservice comprises:
generating the code at the data persistence operation layer of the microservice based on the metadata of the business object or the metadata of the relation object, wherein the code at the data persistence operation layer of the microservice comprises interface code and query resource code.

5. The method according to any one of claims 1 to 4, wherein the relation between the plurality of business objects comprises one or more of a one-to-many relation, a many-to-many relation, a recursion relation, or an aggregation relation.

6. The method according to claim 5, wherein the plurality of business objects comprise a first business object and a second business object, a relation between the first business object and the second business object is the aggregation relation, and the method further comprises:
aggregating the first business object and the second business object to obtain a data transfer object; and
generating the query resource code for the data transfer object.

7. The method according to claim 6, wherein the aggregating the first business object and the second business object to obtain a data transfer object comprises:
aggregating the first business object and the second business object in a nested mode or a Cartesian mode to obtain the data transfer object.

8. The method according to claim 4, 6, or 7, wherein the business model further comprises metadata of an extended application programming interface API, and the method further comprises:
generating code of the extended API based on the metadata of the extended API.

9. The method according to any one of claims 1 to 8, wherein the method further comprises:
receiving a code generation policy configured by the user via the configuration interface; and
the generating code of the microservice based on the business model of the microservice comprises:
generating the code of the microservice based on the business model of the microservice and according to the code generation policy.

10. The method according to claim 9, wherein the code generation policy comprises creation or inheritance.

11. The method according to any one of claims 1 to 8, wherein the method further comprises:
receiving a component extension policy configured by the user via the configuration interface; and
the generating code of the microservice based on the business model of the microservice comprises:
generating code of an extended component of the microservice based on the business model of the microservice and according to the component extension policy.

12. The method according to claim 11, wherein the extended component comprises one or more of an authentication component, a validation component, a probe component, and an annotation configuration component.

13. The method according to any one of claims 1 to 12, wherein the method further comprises:
creating a database model, wherein the database model comprises a root table object and a sharding object.

14. The method according to any one of claims 1 to 13, wherein the code of the microservice comprises a plurality of layers of code, and the method further comprises:
generating a code directory of the microservice, wherein the code directory comprises a plurality of subdirectories, and the plurality of subdirectories are in one-to-one correspondence with the plurality of layers of code.

15. A code management system, wherein the system comprises:
an interaction module, configured to present a configuration interface to a user;
a communication module, configured to receive a business model that is of a microservice and that is configured by the user via the configuration interface, wherein the business model comprises metadata of a plurality of business objects and metadata of a relation object that identifies a relation between the plurality of business objects; and
a generation module, configured to generate code of the microservice based on the business model of the microservice.

16. The system according to claim 15, wherein the generation module is specifically configured to:
generate base module code and extension module code based on the business model of the microservice, wherein the base module code is incapable of being modified by the user, the extension module code is capable of being modified by the user, and the base module code is separated from the extension module code.

17. The system according to claim 15 or 16, wherein the code of the microservice comprises at least one of code at a controller layer, code at a business logic layer, code at a data aggregation layer, code at a data persistence operation layer, and code at a database entity layer.

18. The system according to claim 17, wherein the generating code of the microservice based on the business model of the microservice comprises:
generating the code at the data persistence operation layer of the microservice based on the metadata of the business object or the metadata of the relation object, wherein the code at the data persistence operation layer of the microservice comprises interface code and query resource code.

19. The system according to any one of claims 15 to 18, wherein the relation between the plurality of business objects comprises one or more of a one-to-many relation, a many-to-many relation, a recursion relation, or an aggregation relation.

20. The system according to claim 19, wherein the plurality of business objects comprise a first business object and a second business object, a relation between the first business object and the second business object is the aggregation relation, and the system further comprises:
an aggregation module, configured to aggregate the first business object and the second business object to obtain a data transfer object; and
the generation module is specifically configured to:
generate the query resource code for the data transfer object.

21. The system according to claim 20, wherein the aggregation module is specifically configured to:
aggregate the first business object and the second business object in a nested mode or a Cartesian mode to obtain the data transfer object.

22. The system according to claim 18, 20, or 21, wherein the business model further comprises metadata of an extended application programming interface API, and the generation module is further configured to:
generate code of the extended API based on the metadata of the extended API.

23. The system according to any one of claims 15 to 22, wherein the communication module is further configured to:
receive a code generation policy configured by the user via the configuration interface; and
the generation module is specifically configured to:
generate the code of the microservice based on the business model of the microservice and according to the code generation policy.

24. The system according to claim 23, wherein the code generation policy comprises creation or inheritance.

25. The system according to any one of claims 15 to 22, wherein the communication module is further configured to:
receive a component extension policy configured by the user via the configuration interface; and
the generation module is specifically configured to:
generate code of an extended component of the microservice based on the business model of the microservice and according to the component extension policy.

26. The system according to claim 25, wherein the extended component comprises one or more of an authentication component, a validation component, a probe component, and an annotation configuration component.

27. The system according to any one of claims 15 to 26, wherein the system further comprises:
a creation module, configured to create a database model, wherein the database model comprises a root table object and a sharding object.

28. The system according to any one of claims 15 to 27, wherein the code of the microservice comprises a plurality of layers of code, and the generation module is further configured to:
generate a code directory of the microservice, wherein the code directory comprises a plurality of subdirectories, and the plurality of subdirectories are in one-to-one correspondence with the plurality of layers of code.

29. A computing device cluster, wherein the computing device cluster comprises at least one computing device, the at least one computing device comprises at least one processor and at least one memory, the at least one memory stores computer-readable instructions, and the at least one processor executes the computer-readable instructions, to enable the computing device cluster to perform the method according to any one of claims 1 to 14.

30. A computer-readable storage medium, comprising computer-readable instructions, wherein the computer-readable instructions are for implementing the method according to any one of claims 1 to 14.

31. A computer program product, comprising computer-readable instructions, wherein the computer-readable instructions are for implementing the method according to any one of claims 1 to 14.
